# EUROPÄISCHE PATENTSCHRIFT

(11) **EP 4 306 003 B1**
(45) Veröffentlichungstag und Bekanntmachung des Hinweises auf die Patenterteilung: **29.10.2025**
(21) Anmeldenummer: 23206087.1
(22) Anmeldetag: 31.07.2018
(51) Int. Cl.: A46D 3/00, G05B 19/418, G05B 23/02

(54) **VERFAHREN ZUR HERSTELLUNG VON BÜRSTEN UND BÜRSTENHERSTELLUNGSMASCHINE**
METHOD FOR MANUFACTURING BRUSHES AND BRUSH MANUFACTURING MACHINE
PROCÉDÉ DE FABRICATION DE BROSSES ET MACHINE DE FABRICATION DE BROSSES

(43) Veröffentlichungstag der Anmeldung: 17.01.2024
(62) Teilanmeldung aus: 18186632.8
(73) Patentinhaber: Zahoransky AG, 79674 Todtnau (DE)
(72) Erfinder: Morlock, Sebastian, 79199 Kirchzarten (DE); Kiefer, Joachim, 79677 Schönau im Schwarzwald (DE)
(74) Vertreter: Mertzlufft-Paufler, Cornelius

(56) Entgegenhaltungen:
- CN-A- 104 647 138
- DE-A1- 19 600 192
- ZINGARIELLO FILIPPO: "Intelligente Lager f�r intelligente Maschinen", KONSTRUKTIONS PRAXIS, 23 March 2015 (2015-03-23), pages 1 - 8, XP055786767
- DOLD LUCIAN: "Wie k�nstliche Intelligenz die Maschinensteuerung verbessert", EIN WEB-MAGAZIN VON INDUSTR.COM, 6 February 2018 (2018-02-06), pages 1 - 4, XP055786765
- BRADLEY D: "Mechatronics and the design of intelligent machines", CRC PRESS TAYLOR & FRANCIS GROUP, 19 January 2000 (2000-01-19), pages 46 - 47, XP055786776
- HARIHARAN R. ET AL: "Adaptive Control for Machine Tools", JOURNAL OF THE INDIAN INSTITUTE OF SCIENCE, vol. 58, no. 5, 12 April 1976 (1976-04-12), pages 198 - 225, XP093054823
- HEIDENHAIN: "Dynamic Efficiency - effizient und prozesssicher bearbeiten", F&W, 30 September 2013 (2013-09-30), pages 1 - 8, XP055968728

## Beschreibung

Die Erfindung betrifft ein Verfahren zur Herstellung von Bürsten und eine Bürstenherstellungsmaschine.

Für eine wirtschaftliche Herstellung von Bürsten ist es erforderlich, eine möglichst hohe technische Verfügbarkeit der dabei verwendeten Bürstenherstellungsmaschinen zu erzielen und ungeplante Stillstände der Bürstenherstellungsmaschinen zu vermeiden.

DE 196 00 192 A1 offenbart ein Verfahren zum Überwachen einer Bürstenstopfmaschine mit einem Bürstenträger zum Halten eines Bürstenkörpers mit Borstenlöchern, von denen jeweils eines auf eine Stopfachse ausgerichtet wird, einem Schieber, der an einer Schieberführung in Richtung der Stopfachse hin- und herbeweglich ist und einen an den Bürstenkörper anlegbaren Werkzeugkopf trägt, einem längs der Stopfachse durch den Schieber und den Werkzeugkopf hindurchgehenden Stößelkanal, der einen ersten Einlass für ein Befestigungsmittel und einen zweiten Einlass für Borstenbündel aufweist, einem Bündelförderer zum Fördern jeweils eines Borstenbündels von einem Borstenvorrat zum zweiten Einlass, einem Stößel, der im Stößelkanal längs der Stopfachse hin- und herbewegbar ist zwischen einer Ruhestellung, in der er hinter dem ersten Einlass zurückgezogen ist, und einer Stopfstellung, in der er aus dem Werkzeugkopf herausragt, um in ein Borstenloch einzugreifen, und einer Einrichtung zum Abschalten der Bürstenstopfmaschine bei Überschreitung einer vorgegebenen, zum Bewegen des Stößels erforderlichen Antriebskraft, dadurch gekennzeichnet, dass ein vorgesehener Verlauf der Antriebskraft für die gesamte hin- und hergehende Bewegung des Stößels gespeichert wird, die tatsächliche Antriebskraft während der gesamten hin- und hergehenden Bewegung des Stößels gemessen wird und die gemessene Antriebskraft mit der vorgesehenen Antriebskraft ständig verglichen und die Stopfmaschine abgeschaltet wird, wenn die beiden Kräfte sich über eine vorgegebene Toleranzzone hinaus voneinander unterscheiden.

Aus Heidenhain: "Dynamic Efficiency - effizient und prozesssicher bearbeiten" ist ein Verfahren zur adaptiven Vorschubregelung einer Frässpindel vorbekannt, das bei der Bearbeitung von schwerzerspanbaren Metallen und Legierungen aus der Luft- und Raumfahrtechnik eingesetzt wird. Wird ein Überschreiten einer zulässigen Maximalleistung der Frässpindel detektiert, wird der Vorschub der Frässpindel reduziert, um die Maschinenmechanik zu schonen.

Zur Vermeidung ungeplanter Stillstände ist es beispielsweise bekannt, präventive Instandhaltungsmaßnahmen nach einem festgelegten Plan durchzuführen. Selbst bei konsequenter Durchführung präventiver Instandhaltungsmaßnahmen können die Bürstenherstellungsmaschinen unerwartet in Zustände geraten, die einen einwandfreien Betrieb beeinträchtigen können. Zur Identifikation der Ursachen und zur Behebung solcher Zustände ist oftmals erheblicher Zeitaufwand nötig, in dem die betroffenen Bürstenherstellungsmaschinen für die Produktion nicht verfügbar sind.

Aufgabe der Erfindung ist es daher, ein Verfahren und eine Bürstenherstellungsmaschine der eingangs genannten Art bereitzustellen, mit denen die zuvor umrissenen Nachteile vermieden und die Bürstenherstellung effizienter gestaltet werden können.

Zur Lösung dieser Aufgabe werden bei dem Verfahren der eingangs genannten Art die Mittel und Merkmale des unabhängigen, auf ein derartiges Verfahren gerichteten Anspruchs vorgeschlagen. Somit wird insbesondere zu Lösung der Aufgabe ein Verfahren zur Herstellung von Bürsten unter Verwendung einer Bürstenherstellungsmaschine vorgeschlagen, bei dem eine Regeleinheit der Bürstenherstellungsmaschine in Abhängigkeit einer Eingangsgröße autonom eine Reaktion auslöst, um die Bürstenherstellungsmaschine zumindest mittelbar in einen definierten Sollzustand zu regeln.

Die von der Regeleinheit der Bürstenherstellungsmaschine berücksichtigte Eingangsgröße kann dabei die zuvor umrissenen ungewünschten Zustände repräsentieren. Sobald die Regeleinheit in Abhängigkeit der Eingangsgröße einen Handlungsbedarf erkennt, löst diese autonom eine gezielte Reaktion aus, um die Bürstenherstellungsmaschine in den definierten Sollzustand zurück zu regeln. Auf diese Weise können ungewünschte Zustände der Bürstenherstellungsmaschine früh und vor allem autonom erkannt und entsprechende Reaktionen von der Bürstenherstellungsmaschine autonom definiert und selbst ausgelöst werden, um den ungewünschten Zustand zu beheben oder zu vermeiden und die Bürstenherstellungsmaschine in den definierten Sollzustand zurück zu regeln. Auf diese Weise kann die Bürstenherstellung effizienter als bisher erfolgen. Zudem ist es möglich, auf diese Weise ungeplante Stillstandszeiten oder Ausfälle der Bürstenherstellungsmaschine zu reduzieren oder sogar vollständig zu vermeiden.

Besonders vorteilhaft kann es sein, wenn als Eingangsgröße eine von der Bürstenherstellungsmaschine autonom definierte oder erzeugte Größe verwendet wird. Die autonom definierte Größe kann beispielsweise durch maschinelles Lernen von der Bürstenherstellungsmaschine und/oder von der zuvor erwähnten Regeleinheit der Bürstenherstellungsmaschine generiert werden.

Ferner ist es möglich, als Eingangsgröße einen Istwert eines Prozessparameters der Bürstenherstellungsmaschine und/oder einer Größe, die insbesondere eine physikalische Größe sein kann, zu verwenden. Der Istwert des Prozessparameters und/oder der Größe kann z.B. mithilfe zumindest eines Sensors der Bürstenherstellungsmaschine ermittelt werden. So kann die Bürstenherstellungsmaschine in der Lage sein, einen interessierenden Prozessparameter der Bürstenherstellungsmaschine und/oder eine interessierende, insbesondere physikalische, Größe autonom zu überwachen und bei Bedarf erforderliche Schritte ebenso autonom einzuleiten, falls der interessierende Prozessparameter und/oder die Größe aus einem definierten Toleranzbereich gerät, was ohne Reaktion zu einer Beeinträchtigung der Bürstenherstellung bzw. zu einem Ausfall der Bürstenherstellungsmaschine führen könnte.

Die Eingangsgröße kann in einem zumindest zeitweise mit der Regeleinheit verbundenen Speicher, insbesondere der Bürstenherstellungsmaschine, gespeichert werden. Die Regeleinheit der Bürstenherstellungsmaschine kann auf den Speicher Zugriff nehmen, um die Eingangsgröße auszulesen und die Regelung vorzunehmen. Dabei kann die Bürstenherstellungsmaschine, insbesondere die Regeleinheit, eine Eingangsgröße, die von der Bürstenherstellungsmaschine selbst definiert und/oder ermittelt wird, in dem zuvor erwähnten Speicher hinterlegen.

Die Regeleinheit der Bürstenherstellungsmaschine kann ferner unter Berücksichtigung der Eingangsgröße als Reaktion wenigstens einen Aktor der Bürstenherstellungsmaschine autonom betätigen, wodurch die Bürstenherstellungsmaschine in den definierten Sollzustand geregelt wird. Auf diese Weise wird ein Verfahren geschaffen, das eine weitgehend oder sogar vollständig autonome Reaktion der Bürstenherstellungsmaschine auf einen festgestellten Istwert und/oder eine Eingangsgröße erlaubt. So kann die Bürstenherstellungsmaschine, die gemäß dem Verfahren arbeitet, weitgehend ohne menschliche Überwachung agieren, um frühzeitig erkennbare Fehler, Fehlfunktionen, Ausfallrisiken und dergleichen reduzieren oder vermeiden zu können.

Ferner kann es zweckmäßig sein, wenn die Bürstenherstellungsmaschine, insbesondere die Regeleinheit der Bürstenherstellungsmaschine, den Sollzustand, in den sich die Bürstenherstellungsmaschine selbst regelt, autonom definiert. Dies kann beispielsweise auf Basis der Eingangsgröße, eines vorgegebenen Produktionsprogramms und/oder einer der Bürstenherstellungsmaschine, insbesondere der Regeleinheit der Bürstenherstellungsmaschine, übermittelten Vorgabe erfolgen.

Besonders zweckmäßig kann es sein, wenn die Bürstenherstellungsmaschine, insbesondere die Regeleinheit der Bürstenherstellungsmaschine, aus zuvor vorgenommenen Regelungen maschinell lernt, die Reaktionen optimiert auszuführen. Eine optimiert ausgeführte Reaktion kann beispielsweise in der optimierten Betätigung eines, insbesondere des bereits zuvor erwähnten, Aktors der Bürstenherstellungsmaschine bestehen, um den Sollzustand möglichst schnell zu erreichen. Das maschinelle Lernen kann dabei unter Berücksichtigung zuvor durchgeführter Regelungsvorgänge erfolgen. Zu diesem Zweck kann es vorteilhaft sein, wenn die Bürstenherstellungsmaschine, insbesondere die Regeleinheit der Bürstenherstellungsmaschine durchgeführte Regelungen/Regelungsvorgänge aufzeichnet und diese in einem, beispielsweise dem bereits zuvor erwähnten, Speicher hinterlegt. Auf diesen in der Vergangenheit durchgeführten Regelungen/Regelungsvorgängen kann die Bürstenherstellungsmaschine, insbesondere die Regeleinheit, autonom und maschinell Lernen und ihre Verhaltensweise auf neue Umstände schneller anpassen.

Erfindungsgemäß wird als Eingangsgröße für das Verfahren ein Verschleißgrad eines Verschleißteils der Bürstenherstellungsmaschine verwendet. Dabei kann es vorteilhaft sein, den Verschleißgrad mithilfe wenigstens eines Sensors zu ermitteln. Dieser wenigstens eine Sensor der Bürstenherstellungsmaschine kann hierfür mit der zuvor erwähnten Regeleinheit der Bürstenherstellungsmaschine signaltechnisch verbunden sein. Dazu können entsprechende Signalverbindungen zwischen der Regeleinheit und dem wenigstens einen Sensor und zwischen der Regeleinheit und dem wenigstens einen Aktor vorhanden sein. Auf diese Weise ist es möglich, ein Sensorsignal von dem Sensor an die Regeleinheit der Bürstenherstellungsmaschine zu übertragen. Auf Basis des Sensorsignals kann die Regeleinheit dann ein Stellsignal erzeugen, durch das der Aktor betätigt wird, um die Bürstenherstellungsmaschine in den Sollzustand zu bringen.

Es ist aber auch möglich, als Eingangsgröße eine Größe zu verwenden, die einen Bestand an Produktionsmaterial repräsentiert, der an der Bürstenherstellungsmaschine zur Produktion zur Verfügung steht. Der Bestand an Produktionsmaterial kann zumindest mittelbar mithilfe wenigstens eines Sensors der Bürstenherstellungsmaschine ermittelt werden.

Erfindungsgemäß wird als Reaktion eine Antriebsleistung der Bürstenherstellungsmaschine, insbesondere zumindest eines Antriebs der Bürstenherstellungsmaschine, vorzugsweise mithilfe eines Aktors, auf einen definierten Wert eingestellt. Dies geschieht, wenn die Eingangsgröße oder ein daraus abgeleiteter Wert einen definierten Grenzwert erreicht hat. Hierbei kann vorgesehen sein, dass die Antriebsleistung der Bürstenherstellungsmaschine mithilfe des Aktors auf einen Wert von 90 % oder auch 80 % einer Ausgangsleistung der Bürstenherstellungsmaschine reduziert wird. Selbstverständlich kann als Aktor hier auch der in seiner Leistung zeitweise zu reduzierende Antrieb verwendet und direkt von der Regeleinheit angesteuert werden.

Als Eingangsgröße kann zum Beispiel auch ein Verschleißgrad eines überwachten Verschleißteils verwendet werden. Sobald der Verschleißgrad des überwachten Verschleißteils einen Grenzwert erreicht, kann die Antriebsleistung der Bürstenherstellungsmaschine bzw. eines Antriebs der Bürstenherstellungsmaschine z.B. aus Sicherheitsgründen reduziert werden.

Auf diese Weise kann bei Bedarf ferner eine Standzeit des Verschleißteils der Bürstenherstellungsmaschine verlängert werden, indem die Leistung, mit der die Bürstenherstellungsmaschine betrieben wird, reduziert wird. Auf diese Weise kann ein verschleißbedingter Ausfall der Bürstenherstellungsmaschine durch Reduktion der Antriebsleistung der Bürstenherstellungsmaschine so lange hinausgezögert werden, bis z.B. entweder ein Ersatzteil für das vom Verschleiß bedrohte Verschleißteil zum Austausch bereitsteht oder aber ohnehin ein produktionsbedingter Stillstand oder eine Pause ansteht, in der ein Austausch des Verschleißteils und/oder eine Reparatur der Bürstenherstellungsmaschine ohne ungeplante Unterbrechung der Produktion stattfinden können.

Ferner kann eine Verschleißgradentwicklung eines überwachten Verschleißteils der Bürstenherstellungsmaschine mit zumindest einer in der Vergangenheit aufgezeichneten Verschleißgradentwicklung verglichen werden. Der Vergleich der Verschleißgradentwicklungen kann vorzugsweise mithilfe der bereits zuvor erwähnten Regeleinheit der Bürstenherstellungsmaschine erfolgen. Aus dem Vergleich der Verschleißgradentwicklungen kann auf ungewöhnliche Verschleißereignisse rückgeschlossen werden. Dies ermöglicht eine frühzeitige und präventive Reaktion auf die aktuelle Situation. So können eine Beschädigung der Bürstenherstellungsmaschine, die Produktion von Ausschuss und/oder potentiell gefährliche Situationen vermieden werden. Ferner kann die Bürstenherstellungsmaschine auf Basis einer ungewöhnlichen Verschleißgradentwicklung zumindest eines überwachten Verschleißteils auf diese Weise eine Selbstdiagnose durchführen und sich selbst durch Anpassung zumindest eines Prozessparameters wieder in einen ordnungsgemäßen Zustand, der dem Sollzustand entsprechen kann, regeln. Dies kann bevorzugt vollständig ohne menschlichen Eingriff erfolgen. Günstig kann es in diesem Zusammenhang sein, wenn der Prozessparameter mit einem, beispielsweise dem bereits zuvor erwähnte, von der Regeleinheit ansteuerbaren Aktor angepasst wird.

An dieser Stelle sei erwähnt, dass als Prozessparameter auch Maschinenparameter zu verstehen sind, deren Veränderung zu einem veränderten Verhalten der Bürstenherstellungsmaschine führen kann.

In diesem Zusammenhang kann es besonders vorteilhaft sein, mithilfe der Regeleinheit eine Reaktion auszulösen, wenn die aktuelle Verschleißgradentwicklung von der aufgezeichneten Verschleißgradentwicklung, die als Referenz dient, in einem definierten Maß abweicht. Als Reaktion kann beispielsweise eine Meldung bezüglich der Verschleißgradentwicklungen ausgegeben werden. Als Reaktion kann ein Ersatzteil für das überwachte Verschleißteil selbst und autonom von der Bürstenherstellungsmaschine und/oder von einem mit der Bürstenherstellungsmaschine verbundenen PPS-System (Produktionsplanungs- und Steuerungssystem) angefordert werden. Ferner ist es möglich, als Reaktion autonom eine Selbstdiagnose und/oder Fehleranalyse durchzuführen, um notwendige Maßnahmen zu identifizieren, die ergriffen werden sollten, um die Bürstenherstellungsmaschine zurück in ihren ordnungsgemäßen Zustand zu regeln.

Wie bereits zuvor erwähnt, kann sich die Bürstenherstellungsmaschine, insbesondere mithilfe ihrer Regeleinheit, selbst wieder in einen ordnungsgemäßen Zustand/Sollzustand zurückregeln. Dies indem sie zumindest einen Prozessparameter, insbesondere durch Betätigung zumindest eines Aktors der Bürstenherstellungsmaschine, gezielt verändert, die Veränderung und deren Effekt mithilfe zumindest eines, beispielsweise mithilfe des bereits zuvor erwähnten, Sensors verfolgt und gegebenenfalls weitere Anpassungen an zumindest einem Prozessparameter der Bürstenherstellungsmaschine vornimmt. Dies so lange bis sie wieder ihren ordnungsgemäßen Zustand und/oder den definierten Sollzustand erreicht hat.

Nachfolgend sind Ausgestaltungen des Verfahrens aufgeführt, die insbesondere die bereits zuvor erwähnte Bestimmung des Verschleißgrads eines Verschleißteils und mögliche Varianten davon betreffen.

Nach einem Beispiel wird der Verschleißgrad eines Bündelabteilers der Bürstenherstellungsmaschine anhand der Qualität mit dem Bündelabteiler abgeteilter Borstenbündel, einer Messung des mechanischen Widerstandes beim Bewegen des Bündelabteilers, mittels wenigstens eines Sensors und/oder mittels Drehbewegungsmessung zumindest mittelbar bestimmt.

Die Qualität der abgeteilten Borstenbündel kann vorzugsweise mit einem Sensor, insbesondere mit einer Kamera und/oder mit einer optischen Messanordnung bestimmt werden. Wird ein erhöhter Verschleiß des Bündelabteilers festgestellt, kann mithilfe eines entsprechenden Aktors der Bürstenherstellungsmaschine beispielsweise die Frequenz, mit der der Bündelabteiler zur Entnahme von Borstenbündeln aus einem Borstenvorrat an diesem vorbei bewegt wird, reduziert werden. Auf diese Weise kann der Bündelabteiler länger verwendet werden, bevor er verschleißbedingt tatsächlich ausfällt. Die so gewonnene Zeit kann beispielsweise zur Beschaffung eines Austauschteils für den Bündelabteiler verwendet werden. Der hierbei von der Regeleinheit angesteuerte Aktor kann ein Antrieb, insbesondere ein Schwenkantrieb, des Bündelabteilers sein. Der Borstenvorrat kann in einem Materialkasten der Bürstenherstellungsmaschine vorgehalten werden.

Nach einem Beispiel wird der Verschleißgrad wenigstens eines elektrischen Antriebs der Bürstenherstellungsmaschine zumindest mittelbar anhand einer mithilfe eines Temperatursensors ermittelten Betriebstemperatur des Antriebs bestimmt. Hierfür kann als Sensor ein Temperatursensor verwendet werden. Wird ein kritischer Verschleißgrad des überwachten Antriebs festgestellt, kann die Antriebsleistung des vom Verschleiß bedrohten Antriebs mithilfe der Regeleinheit der Bürstenherstellungsmaschine reduziert werden, um den zu erwartenden Ausfall hinauszuzögern und die Standzeit des Antriebs entsprechend zu verlängern. Der Antrieb kann hierbei als angesteuerter Aktor dienen.

Nach einem Beispiel wird der Druck in einem Materialkasten der Bürstenherstellungsmaschine, der von Borstenmaterial und/oder einem Materialdrücker, der auf das Borstenmaterial drückt, erzeugt wird, erfasst. Hierzu kann die Bürstenherstellungsmaschine zumindest einen entsprechenden Sensor aufweisen. Wird mithilfe des zumindest einen Sensors ein zu niedriger Druck erfasst, kann die Regeleinheit der Bürstenherstellungsmaschine den als Aktor fungierenden Materialdrücker dazu veranlassen, einen höheren Druck im Materialkasten der Bürstenherstellung zu erzeugen. Auf diese Weise wird sichergestellt, dass ein für eine ordnungsgemäße Entnahme von Borstenbündeln aus dem Materialkasten der Bürstenherstellungsmaschine mithilfe eines Bündelabteilers erforderlicher Materialdruck im Materialkasten anliegt. Die nach dem Verfahren arbeitende Bürstenherstellungsmaschine kann hierbei eine Anpassung des Materialdrucks im Materialkasten mithilfe ihrer Regeleinheit autonom vornehmen. Ein Eingriff durch einen Bediener der Bürstenherstellungsmaschine ist dabei nicht erforderlich. Ferner ist es möglich, die Anzahl aus dem Materialkasten ausgefasster Borsten mithilfe eines entsprechenden Sensors, insbesondere mithilfe einer entsprechenden Kamera, zu zählen. Aus der Anzahl aufgefasster Borsten kann indirekt auf den im Materialkasten anliegenden Materialdruck geschlossen werden. Detektierten die Regeleinheit, dass zu wenig Borsten aus gefasst wurden, kann sie den Materialdrücker ansteuern und einen höheren Druck im Materialkasten über den Materialdrücker bewirken.

Nach einem Beispiel wird der Verschleißgrad wenigstens eines Stößels der Bürstenherstellungsmaschine anhand einer Stoßkraft, mit der der Stößel betätigt wird, bestimmt. Hierfür kann als Sensor ein Kraftsensor verwendet werden. Wird mithilfe des Sensors ein erhöhter Verschleiß des Stößels gemessen, kann die Regeleinheit der Bürstenherstellungsmaschine die Frequenz, mit der der Stößel betätigt wird, reduzieren, um die Standzeit des Stößels so lange zu verlängern, bis ein Austauschteil für den Stößel zur Verfügung steht.

Nach einem Beispiel wird der Verschleißgrad wenigstens einer Schneidvorrichtung der Bürstenherstellungsmaschine anhand einer, vorzugsweise mit einem entsprechenden Sensor ermittelten/durchgeführten, Stromaufnahme, Schwingungsmessung, Schneidezeit, Messertemperatur und/oder Schneidkraft bestimmt. Wird ein erhöhter Verschleiß der Schneidvorrichtung detektiert, kann die Bürstenherstellungsmaschine, insbesondere mittels ihrer Regeleinheit, eine Anzahl von Schneidvorgängen pro Zeiteinheit reduzieren, um die zu erwartende Standzeit der Schneidvorrichtung zu verlängern. Als Aktor kann hierbei ein Antrieb der Schneidvorrichtung dienen, der mit der Regeleinheit direkt angesteuert werden kann.

Nach einem Beispiel wird der Verschleißgrad wenigstens einer Ansaugleitung der Bürstenherstellungsmaschine für Borstenfilamente, insbesondere durch Volumenstrom- und/oder Differenzdruckmessung, bestimmt. Hierfür kann als Sensor beispielsweise ein Drucksensor und/oder Durchflusssensor verwendet werden. Der Verschleißgrad einer Ansaugleitung der Bürstenherstellungsmaschine kann beispielsweise durch Verschmutzung der Ansaugleitung hervorgerufen sein. Stellt die Bürstenherstellungsmaschine einen erhöhten Verschleiß der Ansaugleitung fest, kann sie eine Reinigungsvorrichtung der Bürstenherstellungsmaschine, die dann als Aktor fungiert, aktivieren, um die Ansaugleitung zu reinigen. Die Reinigungsvorrichtung kann hierbei im einfachsten Falle ein Gebläse sein oder umfassen, das einen Druckstoß zur Reinigung durch die Ansaugleitung hindurch bläst.

Nach einem Beispiel wird der Verschleißgrad wenigstens einer Schleifvorrichtung der Bürstenherstellungsmaschine, insbesondere durch Kamerakontrolle eines Schleifwerkzeugs und/oder eines mit Hilfe der Schleifvorrichtung bearbeiteten Produktes, anhand einer Stromaufnahme, einer Partikelmessung und/oder anhand von Schmutzbildung beim Betrieb der Schleifvorrichtung, bestimmt. Hierfür kann als Sensor beispielsweise ein entsprechender Partikelsensor und/oder Durchflusssensor verwendet werden. Als Aktor kann hierbei ein Antrieb der Schleifvorrichtung dienen, der mit der Regeleinheit direkt angesteuert werden kann. Ist absehbar, dass die Schleifvorrichtung aufgrund von zunehmenden Verschleiß in absehbarer Zeit ausfallen wird, kann die Bürstenherstellungsmaschine, insbesondere die Regeleinheit der Bürstenherstellungsmaschine, den Antrieb der Schleifvorrichtung als Aktor derart ansteuern, dass die Schleifvorrichtung mit einer geringeren Leistung betrieben wird und daher eine verlängerte zu erwartende Standzeit hat. Auf diese Weise kann der drohende Ausfall verzögert und Zeit gewonnen werden, ein Austauschteil zu beschaffen.

Nach einem Beispiel wird der Verschleißgrad zumindest eines Fräsers der Bürstenherstellungsmaschine, insbesondere durch Kamerakontrolle des Fräsers und/oder eines von dem Fräser bearbeiteten Endproduktes, und/oder anhand einer Stromaufnahme beim Betrieb des Fräsers bestimmt. Hierfür kann als Sensor beispielsweise ein optischer Sensor und/oder eine Kamera verwendet werden. Als Aktor, den die Bürstenherstellungsmaschine, insbesondere die Regeleinheit der Bürstenherstellungsmaschine, in Reaktion auf den Verschleißgrad des Fräsers ansteuert, kann ein Antrieb des Fräsers verwendet werden. Bei Bedarf kann auch hier eine Antriebsleistung des Antriebs mithilfe der Regeleinheit reduziert werden, um die zu erwartende Standzeit des Fräsers zu verlängern.

Nach einem Beispiel wird der Verschleißgrad, insbesondere ein Bruch, einer Stößerzunge der Bürstenherstellungsmaschine bestimmt, insbesondere anhand eines während des Betriebs der Stößerzunge mittels eines entsprechenden Sensors überwachten Stößerdrucks, eines Überdruckventils und/oder einer Kraftmessvorrichtung. Hierfür kann als Sensor beispielsweise ein entsprechender Druck- oder Kraftsensor verwendet werden. Als Aktor kann hier ein Stößerantrieb der Stößerzunge dienen. Wird beispielsweise ein Bruch der Stößerzunge zumindest mittelbar detektiert, kann die Regeleinheit den Stößerantrieb der Stößerzunge deaktivieren, um auf diese Weise weitere Beschädigungen zu vermeiden.

Nach einem Beispiel wird als Eingangsgröße zumindest eine physikalische Eigenschaft der Umgebung, in der das Verfahren durchgeführt, von der Regeleinheit der Bürstenherstellungsmaschine berücksichtigt wird. Konkret kann beispielsweise eine Luftfeuchtigkeit und/oder Temperatur in der Umgebung der Bürstenherstellungsmaschine durch zumindest einen entsprechenden Sensor der Bürstenherstellungsmaschine aufgenommen und bei der Verarbeitung von Borstenmaterial berücksichtigt werden. Gerät die Luftfeuchtigkeit und/oder Temperatur in einen Bereich außerhalb eines Toleranzbereichs, kann die Bürstenherstellungsmaschine, insbesondere die Regeleinheit, eine Heiz- und/oder Kühl- und/oder Klimatisierungsvorrichtung der Bürstenherstellungsmaschine als Aktor derart ansteuern, dass die Luftfeuchtigkeit und/oder Temperatur, die im Bereich der Bürstenherstellungsmaschine messbar ist/sind, zurück in den Toleranzbereich geregelt wird/werden. Es wurde nämlich festgestellt, dass eine bestimmte Luftfeuchtigkeit und/oder Temperatur in engem Zusammenhang mit der Qualität der auf der Bürstenherstellungsmaschine produzierten Endprodukte stehen kann. Ebenso gibt es auch einen Zusammenhang zwischen der Maschinenverfügbarkeit und der Temperatur/Luftfeuchtigkeit, in der die Bürstenherstellungsmaschine betrieben wird. So kann also auch hier die Bürstenherstellungsmaschine unter Berücksichtigung einer physikalischen Eingangsgröße, die sich, wenn sie außerhalb des Toleranzbereichs ist, negativ auf die Maschinenverfügbarkeit und/oder Produktionsqualität auswirken kann, autonom Einfluss auf ihre Umgebung nehmen und durch die Regeleinheit die Bürstenherstellungsmaschine in einen gewünschten Sollzustand zurück regeln.

Nach einem Beispiel werden als Eingangsgröße eine Temperatur und/oder bestimmte physikalische und/oder chemische Größe von abgesaugten Dämpfen beim Filament-Verschweißen von der Bürstenherstellungsmaschine, insbesondere von ihrer Regeleinheit, zur Anpassung von Schmelztemperaturen berücksichtigt. Die verwendete Eingangsgröße kann hier von einem geeigneten Sensor der Bürstenherstellungsmaschine bestimmt werden. Als von der Regeleinheit angesteuerter Aktor kann hierbei eine Heizvorrichtung der Bürstenherstellungsmaschine dienen, mit der die Borstenfilamente zum Filament-Verschweißen erhitzt werden. Wird bei dem Verfahren auch ein Spritzgießschritt verwendet, kann ein Spritzdruck beim Spritzgießen als Eingangsgröße von der Bürstenherstellungsmaschine, insbesondere von ihrer Regeleinheit, berücksichtigt werden. Der Spritzdruck kann mithilfe eines entsprechenden Sensors der Bürstenherstellungsmaschine bestimmt werden. Als angesteuerter Aktor, der mithilfe der Regeleinheit Bürstenherstellungsmaschine beeinflusst werden kann, kann eine Spritzgiessmaschine der Bürstenherstellungsmaschine verwendet werden. Wird festgestellt, dass der Spritzdruck zu gering ist, passt die Bürstenherstellungsmaschine den Spritzdruck entsprechend an. Hierzu kann die Regeleinheit ein entsprechendes Steuer- oder Regelsignal an die Spritzgiessmaschine übermitteln.

Nach einem Beispiel wird der Verschleißgrad zumindest eines Eindreh-Servomotors der Bürstenherstellungsmaschine bestimmt, insbesondere anhand einer Temperaturmessung, einer Widerstandsüberwachung, einer Schwingungsmessung, einer Überwachung von Drehzahlen, einer Drehmomentmessung, einer Zählung mithilfe des Eindreh-Servomotors erzeugter Windungen. Hierfür kann als Sensor beispielsweise ein entsprechender Widerstandssensor, Temperatursensor, Dehzahlsensor, Schwingungssensor und/oder optischen Sensor und/oder eine Kamera verwendet werden. Der Eindreh-Servomotor kann in diesem Regelkreis als Aktor von der Regeleinheit angesteuert werden.

Nach einem Beispiel wird der Verschleißgrad zumindest einer Stößerzunge der Bürstenherstellungsmaschine mit einem Sensor, insbesondere mit einem Drucksensor, mit einem Überdruckventil und/oder mit einem Kraftsensor bestimmt. Hierfür kann als Sensor beispielsweise ein entsprechender Drucksensor und/oder ein Kraftsensor verwendet werden. Als Eingangsgröße kann der mit dem Sensor ermittelte Druck oder die mit dem Sensor ermittelte Kraft dienen und von der Bürstenherstellungsmaschine, insbesondere ihrer Regeleinheit, berücksichtigt werden. Als Aktor kann ein Stößerantrieb der Stößerzunge angesteuert werden. In Reaktion auf einen detektierten, kritischen Verschleiß kann der Stö-ßerantrieb von der Regeleinheit entsprechend angesteuert werden, um die Standzeit der Stößerzunge zu verlängern, bis ein Austauschteil für die Stößerzunge bereitsteht.

Nach einem Beispiel wird der Verschleißgrad zumindest eines Bohrers der Bürstenherstellungsmaschine bestimmt , insbesondere anhand einer Bohrvorschubmessung, einer Drehmomentaufnahme an einem Bohrfutter des Bohrers und/oder anhand einer Drehzahl des Bohrers. Ein ermitteltes Drehmoment und/oder eine Drehzahl des Bohrers können hierbei als Eingangsgröße dienen. Als Sensor kann beispielsweise ein Drehzahlsensor, ein Drehmomentsensor, ein Kraftsensor und/oder ein Wegsensor verwendet werden. Als möglicher Aktor kann in diesem Regelkreis ein Antrieb des Bohrers dienen, der wiederum entsprechend geregelt wird, um die Bürstenherstellungsmaschine in den gewünschten Sollzustand zu bringen.

Bei einer erfindungsgemäßen Ausgestaltung des Verfahrens, insbesondere umfassend die Merkmale einer der vorherigen Ausgestaltungen, ist vorgesehen, dass der Verschleißgrad wenigstens eines Stiftpakets der Bürstenherstellungsmaschine ermittelt wird, vorzugsweise anhand einer Partikelentwicklung bei Benutzung des Stiftpakets mithilfe einer Kamera und/oder anhand eines sich einstellenden Einpressdrucks bei Verwendung des Stift-Pakets. Hierfür kann als Sensor zur Ermittlung einer Eingangsgröße beispielsweise ein entsprechender optischer Sensor und/oder ein Druck- oder Kraftsensor und/oder eine Kamera verwendet werden. Als möglicher Aktor in diesem Regelkreis kann ein Antrieb des Stiftpakets dienen, der wiederum entsprechend geregelt wird, um die Bürstenherstellungsmaschine in den gewünschten Sollzustand zu bringen.

Nach einem Beispiel wird der Verschleißgrad wenigstens einer, insbesondere variablen, Kreisbogenkerbe der Bürstenherstellungsmaschine bestimmt , insbesondere mittelbar durch Zählung von Borstenfilamenten eines mithilfe der, insbesondere variablen, Kreisbogenkerbe aus einem Vorrat loser Borstenfilamente ausgefassten Borstenbündels. Hierfür kann als Sensor zur Bestimmung einer Eingangsgröße für die Regelung beispielsweise ein entsprechender optischer Sensor und/oder eine Kamera verwendet werden. Als möglicher Aktor in diesem Regelkreis kann ein Stellantrieb der variablen Kreisbogenkerbe angesteuert werden. Als Eingangsgröße kann in diesem Beispiel eine Anzahl von Borstenfilamenten in einem Borstenbündel von der Regeleinheit zur Regelung verwendet werden.

Nach einem Beispiel wird der Verschleißgrad einer Drahtabzugsvorrichtung der Bürstenherstellungsmaschine bestimmt, insbesondere durch vorzugsweise optische Überprüfung eines mit der Drahtabzugsvorrichtung abgezogenen Drahtes. Hierfür kann als Sensor zur Bestimmung einer Eingangsgröße beispielsweise ein entsprechender optischer Sensor und/oder eine Kamera verwendet werden. Als möglicher Aktor in diesem Regelkreis kann beispielsweise ein Antrieb der Drahtabzugsvorrichtung angesteuert werden.

Nach einem Beispiel wird der Verschleißgrad zumindest einer Drahtschneidevorrichtung der Bürstenherstellungsmaschine bestimmt, insbesondere anhand einer Stromaufnahme beim Betrieb der Drahtschneidevorrichtung, einer Schwingungsmessung, eines Vorschub-Zeit-Diagramms und/oder einer Schneidezeit. Hierfür kann als Sensor zur Bestimmung einer Eingangsgröße für die Regelung beispielsweise ein Schwingungssensor verwendet werden. Als möglicher Aktor in diesem Regelkreis kann beispielsweise ein Antrieb der Drahtschneidevorrichtung angesteuert werden.

Nach einem Beispiel wird der Verschleißgrad zumindest einer Filamentschneidevorrichtung der Bürstenherstellungsmaschine bestimmt, insbesondere anhand einer Stromaufnahme und/oder Schwingungsmessung beim Betrieb der Filamentschneidevorrichtung. Hierfür kann als Sensor zur Bestimmung einer Eingangsgröße beispielsweise ein Schwingungssensor oder auch ein Strommessgerät verwendet werden. Als möglicher Aktor in diesem Regelkreis kann beispielsweise ein Antrieb der Filamentschneidevorrichtung angesteuert werden.

Nach einem Beispiel wird der Verschleißgrad zumindest eines Stopfwerkzeugs der Bürstenherstellungsmaschine bestimmt, insbesondere durch vorzugsweise optische Kontrolle von mit dem Stopfwerkzeug gestopften Borstenbündeln. Hierfür kann als Sensor zur Bestimmung einer Eingangsgröße beispielsweise ein entsprechender optischer Sensor und/oder eine Kamera verwendet werden. Als möglicher Aktor in diesem Regelkreis kann beispielsweise ein Antrieb des Stopfwerkzeugs angesteuert werden.

Nach einem Beispiel wird der Verschleißgrad zumindest einer Drahtvorschubvorrichtung der Bürstenherstellungsmaschine bestimmt. Hierfür kann als Sensor zur Bestimmung einer Eingangsgröße beispielsweise ein entsprechender optischer Sensor und/oder eine Kamera und/oder einen Drehgeber verwendet werden. Als möglicher Aktor in diesem Regelkreis kann beispielsweise ein Antrieb der Drahtvorschubvorrichtung angesteuert werden.

Bei einer erfindungsgemäßen Ausgestaltung des Verfahrens, insbesondere umfassend die Merkmale einer der vorherigen Ausgestaltungen, ist vorgesehen, dass der Verschleißgrad zumindest eines Spanneinsatzes der Bürstenherstellungsmaschine für einen einzudrehenden Draht bestimmt wird, vorzugsweise mittels Spannungsmessung und/oder mittels Schwingungsmessung und/oder mittels Temperaturmessung an einem Linearmotor. Hierfür kann als Sensor zur Bestimmung einer Eingangsgröße beispielsweise ein entsprechender optischer Sensor, ein Temperatursensor, eine Messschaltung, ein Spannungsmessgerät und/oder eine Kamera verwendet werden. Als möglicher Aktor in diesem Regelkreis kann beispielsweise ein Antrieb des Spanneinsatzes angesteuert werden.

Nach einem Beispiel wird der Verschleißgrad einer Biegevorrichtung der Bürstenherstellungsmaschine zum Biegen eines Stieldrahtes zum Beispiel einer eingedrehten Bürste bestimmt, insbesondere durch Messung einer Stromaufnahme eines Servomotors und/oder mittels einer Drahtvorschub-Messung. Hierfür kann als Sensor zur Bestimmung einer Eingangsgröße beispielsweise ein optischer Sensor, ein Temperatursensor, eine Messschaltung, ein Spannungsmessgerät und/oder eine Kamera verwendet werden. Als möglicher Aktor in diesem Regelkreis kann beispielsweise ein Antrieb der Biegevorrichtung angesteuert werden.

Nach einem Beispiel wird der Verschleißgrad einer Drahtstreck-Vorrichtung der Bürstenherstellungsmaschine bestimmt, insbesondere durch Messung einer Stromaufnahme beim Betrieb der Drahtstreck-Vorrichtung und/oder anhand einer Wegmessung, einer Kraftmessung, besonders bevorzugt anhand einer Zugkraftmessung. Hierfür kann als Sensor zur Bestimmung einer Eingangsgröße beispielsweise ein entsprechender optischer Sensor, ein Temperatursensor, eine Messschaltung, ein Wegsensor, ein Strommessgerät und/oder eine Kamera verwendet werden. Als möglicher Aktor in diesem Regelkreis kann beispielsweise ein Antrieb der Drahtstreck-Vorrichtung angesteuert werden.

Nach einem Beispiel wird der Verschleißgrad zumindest eines Puckhandling-Schlauches der Bürstenherstellungsmaschine bestimmt, insbesondere durch Differenzdruckmessung, mittels Unterdruckmessung und/oder Volumenstrommessung. Hierfür kann als Sensor zur Bestimmung einer Eingangsgröße für die Regelung beispielsweise ein entsprechender Drucksensor und/oder Volumenstromsensor und/oder eine Kamera verwendet werden. Als möglicher Aktor in diesem Regelkreis kann beispielsweise eine Ansaugvorrichtung der Bürstenherstellungsmaschine angesteuert werden.

Nach einem Beispiel wird der Verschleißgrad einer Drahtschneidevorrichtung, insbesondere für einen Flachdraht zur Herstellung von Bündelankern und/oder für einen Runddraht zur Herstellung von Schlingen, bestimmt insbesondere durch Messung einer Schneidkraft und/oder durch Messung oder Bestimmung einer Geometrie des geschnittenen Drahtes. Hierfür kann als Sensor zur Bestimmung einer Eingangsgröße beispielsweise ein optischer Sensor, ein Kraft- oder Drucksensor und/oder eine Kamera verwendet werden. Als möglicher Aktor in diesem Regelkreis kann beispielsweise ein Antrieb der Drahtschneidevorrichtung angesteuert werden.

Ferner kann der Bestand an Produktionsmaterial, der an der zumindest einen Bürstenherstellungsmaschine zur Verfügung steht, zumindest mittelbar mit Hilfe eines, insbesondere mithilfe des bereits zuvor erwähnten, Sensors überwacht und als Eingangsgröße berücksichtigt werden. Der Sensor kann zur Bestimmung einer Eingangsgröße, die auch als Parameter bezeichnet werden kann, eingerichtet sein, der den Bestand an Produktionsmaterial repräsentiert und so zumindest mittelbar auf den aktuellen Bestand rückschließen lässt.

Nachfolgend sind weitere Ausgestaltungen des zuvor erwähnten Verfahrens aufgelistet, die sich maßgeblich mit Varianten der zuvor bereits erwähnten Bestandsüberwachung befassen:
Nach einem Beispiel wird als Eingangsgröße der Bestand an Borstenmaterial in einem Materialkasten der Bürstenherstellungsmaschine mithilfe eines entsprechenden Sensors, insbesondere mithilfe eines Drucksensors, im Materialkasten überwacht. In Reaktion auf einen absinkenden Bestand kann die Bürstenherstellungsmaschine, insbesondere über ihre Regeleinheit, eine autonome Nachbestellung von Borstenmaterial auslösen. Hierfür kann die Regeleinheit z.B. eine entsprechende Bestellmeldung an oder über ein PPS-System abgeben oder übertragen.

Nach einem Beispiel wird der Bestand an in einem Filament-Strang enthaltenen Borstenmaterials zur Herstellung von Bürsten als Eingangsgröße bestimmt und berücksichtigt, insbesondere durch Messung der Filamentstrang-Länge mittels zumindest eines entsprechenden Sensors oder Wegsensors. Auch hierbei kann ein Absinken des Bestands unter einen kritischen Wert die Regeleinheit der Bürstenherstellungsmaschine dazu veranlassen, autonom Nachschub an benötigtem Material zu ordern und/oder eine Produktionsrate zu reduzieren. Dies mit dem Ziel mit dem noch vorhandenen Bestand so lange produzieren zu können, bis wieder ein geplanter Stillstand der Bürstenherstellungsmaschine ansteht und/oder Nachschub an Material an die Bürstenherstellungsmaschine geliefert wurde. Auf diese Weise kann ein ungeplanter Stillstand der Produktion verhindert werden.

Zur Lösung der Aufgabe wird auch eine Bürstenherstellungsmaschine mit den Mitteln und Merkmalen des auf eine Bürstenherstellungsmaschine gerichteten unabhängigen Anspruchs vorgeschlagen. So wird insbesondere zur Lösung der Aufgabe eine Bürstenherstellungsmaschine vorgeschlagen, die zur Durchführung des zuvor ausführlich beschriebenen und in den entsprechenden Ansprüchen beanspruchten Verfahrens eingerichtet ist.

Zu diesem Zweck kann die Bürstenherstellungsmaschine eine Regeleinheit, wenigstens einen Sensor und/oder zumindest einen Aktor aufweisen. Der Sensor und der Aktor können signaltechnisch über Signalverbindungen mit der Regeleinheit der Bürstenherstellungsmaschine verbunden sein. Auf diese Weise können der Regeleinheit von dem Sensor erfasste Daten, Informationen, Messwerte oder dergleichen für die Regelung zur Verfügung gestellt werden. Über die signaltechnische Verbindung zwischen der Regeleinheit und dem Aktor kann die Regeleinheit Regel- und/oder Steuersignale an den zumindest einen Aktor der Bürstenherstellungsmaschine übertragen. Der Sensor ist vorzugsweise dazu eingerichtet, einen Istwert zumindest eines mit dem Aktor beeinflussbaren Prozessparameters der Bürstenherstellungsmaschine als Eingangsgröße für die Regeleinheit zu ermitteln. Der Sensor kann dazu eingerichtet sein, einen Istwert einer interessierenden Größe, insbesondere einer physikalischen Größe als Eingangsgröße zu bestimmen, die von der Regeleinheit berücksichtigt werden kann. Die Regeleinheit kann dazu eingerichtet sein, den Aktor autonom zu betätigen. Dies mit dem Ziel die Bürstenherstellungsmaschine in einen definierten Sollzustand zu regeln.

Ferner kann die Bürstenherstellungsmaschine, insbesondere eine Regeleinheit der Bürstenherstellungsmaschine, zur autonomen Erzeugung einer Eingangsgröße eingerichtet sein. Insbesondere bei einer derartigen Bürstenherstellungsmaschine, die mit künstlicher Intelligenz ausgestattet ist und/oder zu maschinellen lernen eingerichtet ist, kann die Bürstenherstellungsmaschine so selbst eine Eingangsgröße definieren, die der Regeleinheit der Bürstenherstellungsmaschine für die gewünschte autonome Regelung der Bürstenherstellungsmaschine zur Verfügung gestellt werden kann. So kann eine Bürstenherstellungsmaschine geschaffen werden, die selbstlernend ist und auf Basis von Erfahrungen definierte Reaktionen auslösen kann, um bei festgestellten Abweichungen von einem definierten Sollzustand der Bürstenherstellungsmaschine sich selbst und autonom möglichst schnell und effizient zurück in den definierten Sollzustand zu bringen. Auf diese Weise können Fehlproduktionen, Ausschuss und dergleichen vermieden und die Herstellung von Bürsten effizienter gestaltet werden.

Eine von der Bürstenherstellungsmaschine berücksichtigte Eingangsgröße kann ein Verschleißgrad eines Verschleißteils sein. Erfindungsgemäß weist die Bürstenherstellungsmaschine wenigstens einen, beispielsweise den bereits zuvor erwähnten, Sensor auf, der dazu eingerichtet ist, den Verschleißgrad eines Verschleißteils der Bürstenherstellungsmaschine zu ermitteln. So wird eine Bürstenherstellungsmaschine geschaffen, die unter Berücksichtigung eines Verschleißgrades zumindest eines Verschleißteils in der Lage ist, autonom Reaktionen auszulösen. Dies kann unter Betätigung des bereits zuvor erwähnten Aktors der Bürstenherstellungsmaschine erfolgen. Ziel der autonom ausgelösten Reaktionen kann beispielsweise sein, die Standzeit der Bürstenherstellungsmaschine derart zu verlängern, dass die Bürstenherstellungsmaschine mit beispielsweise reduzierter Leistung noch so lange betrieben werden kann, bis entweder ein geplantes Wartungsintervall ansteht und/oder einen Ersatzteil für das überwachte Verschleißteil zum Austausch bereitsteht.

Vorteilhaft kann es ferner sein, wenn die Bürstenherstellungsmaschine einen, beispielsweise den bereits zuvor erwähnten, wenigstens einen Aktor aufweist, durch den die Regeleinheit dazu eingerichtet ist, einen Prozessparameter und/oder eine Einstellung der Bürstenherstellungsmaschine zu verändern, um die Bürstenherstellungsmaschine in den Sollzustand zu regeln.

Bei einem Ausführungsbeispiel der Bürstenherstellungsmaschine kann die Regeleinheit, insbesondere durch einen oder den Aktor, dazu eingerichtet sein, eine Antriebsleistung der Bürstenherstellungsmaschine zu verändern, insbesondere zu reduzieren. Dies mit dem Ziel die Bürstenherstellungsmaschine in den Sollzustand zu regeln. Hierbei sei angemerkt, dass der Sollzustand in Abhängigkeit der jeweiligen Situation, in der sich die Bürstenherstellungsmaschine befindet, natürlich variieren kann. Wird beispielsweise ein übermäßiger Verschleiß eines sicherheitsrelevanten Verschleißteils von der Bürstenherstellungsmaschine detektiert, kann es schon aus Sicherheitsgründen vorteilhaft oder notwendig sein, die Antriebsleistung der Bürstenherstellungsmaschine zu reduzieren, z.B. auf 90 % oder 80 % einer Ausgangsleistung der Bürstenherstellungsmaschine. Auf diese Weise kann eine Beschädigung der Bürstenherstellungsmaschine durch ein Versagen des vom Verschleiß bedrohten Verschleißteils vermieden werden. Zudem lässt sich die Standzeit der Bürstenherstellungsmaschine, insbesondere des Verschleißteils, bei Bedarf durch die Reduktion der Antriebsleistung verlängern. Auf diese Weise kann vermieden werden, dass es zu einem ungeplanten Ausfall der Produktion kommt. Dies ist besonders relevant bei einer verketteten Produktion von Bürsten, in der mehrere Bürstenherstellungsmaschine produktionstechnisch miteinander verkettet sind. Hier kann sich eine Gesamtverfügbarkeit der verketteten Produktionsanlage zum Beispiel aus dem Produkt der technischen Verfügbarkeiten der verketteten Einzelmaschinen ergeben, sodass es für eine hohe Gesamtverfügbarkeit von großer Bedeutung ist, die Einzelverfügbarkeiten zu optimieren.

Die Bürstenherstellungsmaschine kann als wenigstens einen Sensor beispielsweise einen Schwingungssensor, einen Kraftsensor, einen Drucksensor, einen Volumenstromsensor, einen Temperatursensor, einen optischen Sensor, eine Messschaltung und/oder eine Kamera aufweisen.

Sämtliche mit dem wenigstens einen Sensor ermittelbaren Daten, Werte, Zustände und/oder Größen können von der Bürstenherstellungsmaschine und auch im Rahmen des Verfahrens als Eingangsgröße(n) verwendet und von der Regeleinheit berücksichtigt werden.

Nachfolgend sind Ausgestaltungen der zuvor beschriebenen Bürstenherstellungsmaschine näher erläutert, die sich maßgeblich mit Varianten des wenigstens einen Sensors zur Bestimmung einer Eingangsgröße, die einen Verschleißgrad eines Verschleißteils der Bürstenherstellungsmaschine repräsentiert, befassen. Selbstverständlich sind sämtliche gegenständlichen Merkmale, die im Zusammenhang mit dem zuvor ausführlich beschriebenen Verfahren erwähnt und erläutert wurden, geeignet, in Kombination mit den in den Ansprüchen dargelegten Merkmalen der Bürstenherstellungsmaschine weitere Ausgestaltungen der Bürstenherstellungsmaschine zu bilden. Insofern ist die Erfindung nicht auf die in den Ansprüchen enthaltenen Merkmalskombinationen beschränkt.

Nach einem Beispiel ist der wenigstens eine Sensor zur Bestimmung des Verschleißgrades wenigstens eines Bündelabteilers der Bürstenherstellungsmaschine eingerichtet. Der Verschleißgrad dient als Eingangsgröße. Als Sensor kann beispielsweise eine Kamera eingesetzt werden, mit der die Qualität mit dem Bündelabteiler abgeteilter Borstenbündel vorzugsweise fortlaufend überwacht werden kann.

Nach einem Beispiel ist der wenigstens eine Sensor ein Temperatursensor zur Messung der Temperatur zumindest eines elektrischen Antriebs der Bürstenherstellungsmaschine . der wenigstens eine Sensor ein Sensor, insbesondere eine Kamera und/oder ein optischer Sensor, zur zumindest mittelbaren Bestimmung des Verschleißgrades einer Schleifvorrichtung der Bürstenherstellungsmaschine.

Nach einem Beispiel ist der wenigstens eine Sensor ein Sensor zur zumindest mittelbaren Bestimmung des Verschleißgrades eines Fräsers der Bürstenherstellungsmaschine, insbesondere eine Kamera und/oder ein Sensor zur Bestimmung einer Stromaufnahme beim Betrieb des Fräsers, zum Beispiel ein Strommessgerät oder eine Strommessschaltung.

Nach einem Beispiel ist der wenigstens eine Sensor ein Sensor zur zumindest mittelbaren Bestimmung des Verschleißgrades eines Eindreh-Servomotors insbesondere ein Temperatursensor, ein Widerstandsensor, ein Drehzahlsensor, ein Schwingungssensor und/oder ein Drehmomentsensor und/oder eine Vorrichtung zum Zählen von Windungen, die beim Eindrehen eines Drahtes erzeugt werden.

Nach einem Beispiel ist der wenigstens eine Sensor ein Sensor zur zumindest mittelbaren Bestimmung des Verschleißgrades zumindest einer Stößer-Zunge der Bürstenherstellungsmaschine, insbesondere ein Drucksensor und/oder ein Kraftsensor und/oder ein Überdruckventil.

Nach einem Beispiel ist der wenigstens eine Sensor ein Sensor zur zumindest mittelbaren Bestimmung des Verschleißgrades eines Bohrers der Bürstenherstellungsmaschine einen Sensor, insbesondere ein Sensor zur Messung eines Bohrvorschubs, ein Drehmomentsensor an einem Bohrfutter des Bohrers und/oder ein Drehzahlsensor.

Nach einem Beispiel ist der wenigstens eine Sensor ein Sensor zur zumindest mittelbaren Bestimmung des Verschleißgrades zumindest eines Stiftpakets der Bürstenherstellungsmaschine, insbesondere eine Kamera, ein Drucksensor und/oder ein optischer Sensor, vorzugsweise zur Ermittlung einer Partikelentwicklung bei Verwendung des Stiftpaktes.

Nach einem Beispiel ist der wenigstens eine Sensor ein Sensor zur zumindest mittelbaren Bestimmung des Verschleißgrades einer, insbesondere variablen, Kreisbogenkerbe einer Bündelabteilvorrichtung der Bürstenherstellungsmaschine insbesondere mit dem eine Zählung von mithilfe der Kreisbogenkerbe zu Bündeln jeweils zusammengefasster Borstenfilamente möglich ist.

Nach einem Beispiel ist der wenigstens eine Sensor ein Sensor zur zumindest mittelbaren Bestimmung des Verschleißgrades einer Drahtvorabzugsvorrichtung der Bürstenherstellungsmaschine, insbesondere mit dem ein mit der Drahtvorabzugsvorrichtung abgezogener Draht hinsichtlich seiner Dicke, Breite, Härte, Riffelung überprüfbar ist.

Nach einem Beispiel ist der wenigstens eine Sensor ein Sensor zur zumindest mittelbaren Bestimmung des Verschleißgrades einer Drahtschneidevorrichtung der Bürstenherstellungsmaschine insbesondere mit dem eine Schwingungsmessung durchführbar, eine Stromaufnahme beim Betrieb der Drahtschneidevorrichtung messbar und/oder ein Vorschub-Zeit-Diagramm und/oder eine Schneidezeit ermittelbar ist/sind.

Nach einem Beispiel ist der wenigstens eine Sensor ein Sensor zur zumindest mittelbaren Bestimmung des Verschleißgrades einer Filamentschneidevorrichtung der Bürstenherstellungsmaschine, insbesondere mit dem eine Stromaufnahmemessung und/oder eine Schwingungsmessung beim Betrieb der Filamentschneidevorrichtung durchführbar ist/sind.

Nach einem Beispiel ist der wenigstens eine Sensor ein Sensor zur zumindest mittelbaren Bestimmung des Verschleißgrades zumindest eines Stopfwerkzeugs der Bürstenherstellungsmaschine vorzugsweise eine Kamera, mit der die Qualität mithilfe des Stopfwerkzeugs gestopfter Borstenbündel überprüfbar ist.

Nach einem Beispiel ist der wenigstens eine Sensor ein Sensor zur Bestimmung des Verschleißgrads einer Drahtvorschubvorrichtung der Bürstenherstellungsmaschine, insbesondere eine Kamera und/oder einen Drehgeber.

Nach einem Beispiel ist der wenigstens eine Sensor ein Sensor zur zumindest mittelbaren Bestimmung des Verschleißgrades zumindest eines Spanneinsatzes der Bürstenherstellungsmaschine, mit dem ein Draht beim Eindrehen gehalten werden kann, insbesondere wobei der Sensor zur Durchführung einer Spannungsmessung an einem Linearmotor, mit dem der Spanneinsatz bewegt wird, eingerichtet ist, und/oder eine Kamera umfasst oder ist.

Nach einem Beispiel ist der wenigstens eine Sensor ein Sensor zur zumindest mittelbaren Bestimmung des Verschleißgrades einer Biegevorrichtung der Bürstenherstellungsmaschine zum Biegen eines Drahtes, insbesondere zum V-Biegen eines Stieldrahtes einer herzustellenden Bürste, insbesondere der zur Messung einer Stromaufnahme am Servomotor und/oder zur Messung eines Vorschubs eingerichtet ist. Der Sensor kann beispielsweise ein Wegsensor sein oder ein Strommessgerät und/oder eine Kamera umfassen.

Nach einem Beispiel ist wenigstens eine Sensor ein Sensor zur zumindest mittelbaren Bestimmung des Verschleißgrades einer Drahtstreckvorrichtung der Bürstenherstellungsmaschine insbesondere mit dem eine Stromaufnahmemessung, eine Wegmessung (Wegsensor) und/oder eine Messung von Zugkräften (Kraft- und/oder Drucksensor) beim Betrieb der Drahtstreckvorrichtung messbar ist/sind.

Nach einem Beispiel ist der wenigstens eine Sensor ein Sensor zur zumindest mittelbaren Bestimmung des Verschleißgrades zumindest eines Puckhandling-Schlauches der Bürstenherstellungsmaschine, insbesondere eines Absaugschlauches, insbesondere ein Drucksensor und/oder ein Volumenstromsensor und/oder ein optischer Sensor, und/oder eine Kamera.

Nach einem Beispiel ist der wenigstens eine Sensor ein Sensor zur zumindest mittelbaren Bestimmung des Verschleißgrades einer Drahtschneidevorrichtung der Bürstenherstellungsmaschine, insbesondere für einen Flachdraht zur Herstellung von Bündelankern und/oder für einen Runddraht zur Herstellung von Schlingen, insbesondere ein Schneidkraftsensor, und/oder zur Messung einer Geometrie eines geschnittenen Drahtes eingerichtet ist.

Die Bürstenherstellungsmaschine kann ferner dazu eingerichtet sein, einen Bestand an Produktionsmaterial zu überwachen, der der Bürstenherstellungsmaschine zur Herstellung von Bürsten zur Verfügung steht. Die Bürstenherstellungsmaschine kann dazu zumindest einen entsprechenden Sensor, zumindest eine entsprechende Messvorrichtung und/oder zumindest eine Kamera aufweisen. Eine von dem Sensor ermittelte Größe, die in Zusammenhang mit dem Bestand an Produktionsmaterial steht, kann von der Regeleinheit als Eingangsgröße berücksichtigt werden. Ferner sei angemerkt, dass im Kontext der beanspruchten technischen Lehre unter Produktionsmaterial jegliches Material zu verstehen ist, dass bei der Herstellung von Bürsten zum Betrieb der Bürstenherstellungsmaschine benötigt oder verwendet wird. Als Produktionsmaterial im Kontext der beanspruchten technischen Lehre wird auch solches Material verstanden, das Bestandteil der herzustellenden Produkte wird.

Nachfolgend sind Ausgestaltungen der Bürstenherstellungsmaschine beschrieben, die Varianten des wenigstens einen Sensors zur Überwachung des Bestandes an Produktionsmaterial betreffen:
Nach einem Beispiel ist der wenigstens eine Sensor zur Überwachung des Bestandes von Borstenmaterial in einem Materialkasten der Bürstenherstellungsmaschine eingerichtet insbesondere wobei der wenigstens eine Sensor ein Drucksensor ist.

Nach einem Beispiel ist der wenigstens eine Sensor zur Überwachung des Bestands an Borstenmaterial in einem Filament-Stang eingerichtet, der mit der Bürstenherstellungsmaschine verarbeitbar ist, insbesondere wobei der Sensor zur Bestimmung einer Restlänge eines Filament-Strangs eingerichtet ist.

Die Erfindung wird nun anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Schutzansprüche untereinander und/oder in Kombination einzelner oder mehrerer Merkmale aus der allgemeinen Beschreibung und/oder der Ausführungsbeispiele. Es zeigen in teilweise stark schematisierter Darstellung:
- Figur 1:: Ein Ablaufdiagramm zur Veranschaulichung einer ersten Variante des erfindungsgemäßen Verfahrens.
- Figur 2:: Ein weiteres Ablaufdiagramm zur Veranschaulichung einer weiteren Variante des erfindungsgemäßen Verfahrens.
- Figur 3:: Eine schematisierte Darstellung einer zur Durchführung des Verfahrens eingerichteten Bürstenherstellungsmaschine.
- Figur 4:: Ein bei der Durchführung des Verfahrens verwendeter Regelkreis, der eine Regeleinheit, einen Sensor und einen Aktor der Bürstenherstellungsmaschine umfasst.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

Sämtliche Figuren zeigen zumindest Teile einer im Ganzen mit 1 bezeichneten Bürstenherstellungsmaschine. Die Bürstenherstellungsmaschine 1 umfasst eine Regeleinheit 2, zumindest einen Sensor 3 und wenigstens einen Aktor 4. Die Regeleinheit 2 ist dazu eingerichtet, den Aktor 4 autonom zu betätigen, um die Bürstenherstellungsmaschine 1 in einen definierten Sollzustand zu regeln. Die autonome Betätigung des Aktors 4 erfolgt dabei gegebenenfalls auch unter Berücksichtigung einer Eingangsgröße, die beispielsweise mit dem zuvor erwähnten Sensor 3 ermittelt werden kann. Die Eingangsgröße kann bestimmte, für die Produktion von Bürsten relevante Prozessparameter und/oder situationsabhängige Einflussfaktoren repräsentieren, die von der Regeleinheit 2 der Bürstenherstellungsmaschine 1 autonom analysiert werden. Falls die Bürstenherstellungsmaschine 1, insbesondere ihre Regeleinheit 2, einen Handlungsbedarf erkennt, wird die Reaktion ausgelöst.

Sowohl der Sensor 3 als auch der Aktor 4 sind über Signalverbindungen 2b signaltechnisch mit der Regeleinheit 2 der Bürstenherstellungsmaschine 1 verbunden. Auf diese Weise ist es möglich, eine von dem Sensor 3 ermittelte Eingangsgröße an die Regeleinheit 2 zu übertragen. Nach Analyse der Eingangsgröße kann die Regeleinheit 2, sofern ein Handlungsbedarf erkannt wurde, den Aktor 4 über die signaltechnische Verbindung entsprechend ansteuern, um die Bürstenherstellungsmaschine 1 in den gewünschten Sollzustand zu regeln.

Der Sensor 3 ist dazu eingerichtet, als Eingangsgröße für die Regelung einen Istwert einer insbesondere physikalischen Größe und/oder einen Istwert eines Prozessparameters der Bürstenherstellungsmaschine 1 zu ermitteln. Hierfür kommen insbesondere solche Eingangsgrößen in Betracht, die mit einem Prozessparameter der Bürstenherstellungsmaschine 1 zusammenhängen, der seinerseits mit dem zumindest einen Aktor 4 beeinflussbar ist. Unterschiedliche Größen und Parameter, die zumindest mittelbar als Eingangsgrößen verwendet werden können, sind im allgemeinen Teil der Beschreibung ausführlich erläutert.

Die Bürstenherstellungsmaschine 1 weist ferner einen Speicher 2a auf, auf den die Regeleinheit 2 der Bürstenherstellungsmaschine 1 Zugriff hat. In diesem Speicher 2a können vorgegebene, von der Bürstenherstellungsmaschine 1 selbst ermittelte und auch die von der Bürstenherstellungsmaschine 1 bzw. ihrer Regeleinheit 2 selbst definierten Eingangsgrößen für die Regelungen hinterlegt werden. Die Regeleinheit 2 kann die Eingangsgrößen über ihren Zugriff auf den Speicher 2a aus diesem auslesen und für eine Analyse und als Ausgangsbasis für eine autonome Regelung verwenden.

Die Bürstenherstellungsmaschine 1 bzw. ihre Regeleinheit 2 sind ferner zur autonomen Erzeugung einer Eingangsgröße für die Regelung der Bürstenherstellungsmaschine 1 und ihrer Aktoren 4 eingerichtet. Ferner ist die Bürstenherstellungsmaschine 1 durch ihre Regeleinheit 2 zum maschinellen Lernen eingerichtet. Auf Basis von vergangenen Regelungen kann die Bürstenherstellungsmaschine 1 so selbstständig optimierte Reaktionsmuster erzeugen, um die Regelung der Bürstenherstellungsmaschine 1 in den Sollzustand zu optimieren. Die von der Bürstenherstellungsmaschine 1 berücksichtigte Eingangsgröße kann beispielsweise ein Verschleißgrad eines Verschleißteils 5, 6 der Bürstenherstellungsmaschine 1 sein.

Unterschiedliche Verschleißteile 5, deren Verschleißgrad bei der Durchführung des Verfahrens von der Bürstenherstellungsmaschine 1 und ihrer Regeleinheit 2 berücksichtigt werden können, sind im allgemeinen Teil der Beschreibung ausführlich erläutert. Der oder die Sensoren 3 der Bürstenherstellungsmaschine 1 sind dann entsprechend dazu eingerichtet, den Verschleißgrad des überwachten Verschleißteils 5 zu ermitteln. Es kann unmittelbar durch eine Beobachtung und/oder Messung des jeweiligen Verschleißteils 5 erfolgen oder aber unmittelbar anhand einer mit dem Verschleißgrad des Verschleißteils 5 zusammenhängenden Größe. Hierbei kann beispielsweise ein Produktionsergebnis, an dem das beobachtete Verschleißteil 5 beteiligt ist, überwacht und kontrolliert bzw. ausgewertet werden. Anhand eines schlechter werdenden Ergebnisses kann auf den Verschleißgrad des Verschleißteils 5 rückgeschlossen werden. Das Ergebnis dieser Prüfung kann somit als Eingangsgröße für die autonome Regelung der Bürstenherstellungsmaschine 1 von der Regeleinheit 2 berücksichtigt werden.

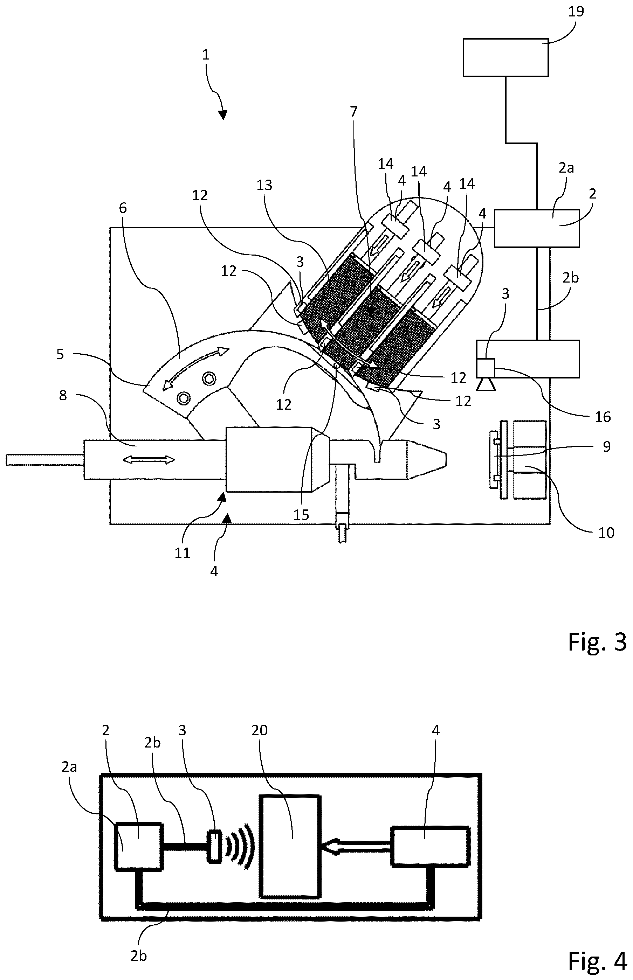

Der bereits zuvor erwähnte wenigstens eine Aktor 4 der Bürstenherstellungsmaschine 1 ist dazu eingerichtet, einen Prozessparameter und/oder eine Einstellung der Bürstenherstellungsmaschine 1 so zu verändern, dass die Bürstenherstellungsmaschine 1 in den gewünschten Sollzustand geregelt wird. Bei dem in den Figuren 3 und 4 gezeigten Ausführungsbeispiel einer Bürstenherstellungsmaschine 1 ist ein überwachtes Verschleißteil 5 ein Bündelabnehmer 6 der Bürstenherstellungsmaschine 1. Mithilfe des Bündelabnehmers 6 werden Borstenbündel aus einem Materialkasten 7 der Bürstenherstellungsmaschine 1 ausgefasst und an ein Stopfwerkzeug 8 der Bürstenherstellungsmaschine 1 übergeben. Mithilfe des Stopfwerkzeugs 8 werden die Borstenbündel nacheinander in einen Bürstenkörper 9 einer herzustellenden Bürste eingestopft. Der Bürstenkörper 9 wird hierfür an einer Haltevorrichtung 10 der Bürstenherstellungsmaschine 1 aufgespannt.

Wird mithilfe eines Sensors 3 der Bürstenherstellungsmaschine 1 festgestellt, dass die mit dem Bündelabteiler 6 ausgefassten Borstenbündel nicht mehr die erforderliche Qualität haben, kann dies auf einen zunehmenden Verschleißgrad des Bündelabnehmers 6 zurückzuführen sein. Sofern die Qualität der ausgefassten Borstenbündel die weitere Produktion von Bürsten erlaubt, kann der Aktor 4, hier ein Antrieb 11 des Bündelabnehmers 6, mithilfe der Regeleinheit 2 derart angesteuert werden, dass eine Antriebsleistung des Antriebs 11 reduziert wird. Dies kann bedeuten, dass der Bündelabnehmer 6 mit geringerer Geschwindigkeit bewegt wird. Dies führt dazu, dass sich die Taktzeit verlängert bzw. eine Anzahl von pro Zeiteinheit ausgefasster Borstenbündel sinkt. Auf diese Weise kann die zu erwartende Standzeit des Bündelabnehmers 6 verlängert werden.

Als Sensoren 3 können, je nach Anwendungsfall, unterschiedliche Sensoren zum Einsatz kommen. So ist es beispielsweise vorstellbar, dass die Bürstenherstellungsmaschine 1 als wenigstens einen Sensor 3 einen Schwingungssensor, einen Kraftsensor, einen Drucksensor 12, einen Volumenstromsensor, einen Temperatursensor, einen optischen Sensor, eine Messschaltung und/oder eine Kamera 16 aufweist.

Anhand des in den Figuren 3 und 4 gezeigten Ausführungsbeispiels der Bürstenherstellungsmaschine 1 kann ein weiterer Regelkreis erläutert werden. Dieser Regelkreis umfasst als Sensoren 3 mehrere in oder an dem Materialkasten 7 der Bürstenherstellungsmaschine 1 verteilt angeordnete Drucksensoren 12. Diese Drucksensoren 12 nehmen den auf die im Materialkasten 7 befindlichen Borstenfilamente 13 übertragenen Materialdruck auf. Der Materialdruck, der über die Borstenfilamente 13 auf die Drucksensoren 12 der Bürstenherstellungsmaschine 1 wirkt, wird von Materialdrückern 14 erzeugt. Die von den Drucksensoren 12 ermittelten Druckwerte werden der Regeleinheit 2 der Bürstenherstellungsmaschine 1 als Eingangsgröße bereitgestellt. Sinkt der Materialdruck, der mit den Drucksensoren 12 aufgenommen wird, unter einen kritischen Wert, veranlasst die Regeleinheit 2 durch ein entsprechendes Regel- oder Steuersignal die Materialdrücker 14, den auf die Borstenfilamente 13 wirkenden Druck zu erhöhen, um den Materialdruck im Materialkasten 7 in einen Sollbereich zu bringen. Der durch die Materialdrücker 14 im Materialkasten 7 auf die Borstenfilamente 13 im Materialkasten 7 verursachte Materialdruck sorgt dafür, dass die Borstenfilamente 13 gegen den Bündelabnehmer 6 gedrückt werden. Ein korrekter Materialdruck im Materialkasten 7 ist relevant für ein gleichmäßiges Ausfassen von Borstenbündeln mithilfe des Bündelabnehmers 6.

Zum Ausfassen von Borstenbündeln weist der Bündelabnehmer 6 eine Abteilkerbe 15 auf, in die die Borstenfilamente 12 aufgrund des Materialdrucks beim Vorbeibewegen des Bündelabnehmers 6 am Materialkasten 7 hineingedrückt werden. Ist der Materialdruck zu niedrig, werden Borstenbündel ausgefasst, die zu wenige Borstenfilamente 13 umfassen. Die Kontrolle, ob ausgefasste Borstenbündel eine ausreichende Anzahl von Borstenfilamenten 13 umfassen, erfolgt bei dem in Figur 3 gezeigten Ausführungsbeispiel der Bürstenherstellungsmaschine 1 mithilfe eines Sensors 3 in Form einer Kamera 16. Mithilfe der Kamera 16 kann die Anzahl in einem Borstenbündel zusammengefasster Borstenfilamente 13 bestimmt werden. Die bestimmte Anzahl von Borstenfilamenten 13 in einem Borstenbündel wird von der Regeleinheit 2 der Bürstenherstellungsmaschine 1 mit einem Sollwert verglichen. Ergibt dieser Vergleich, dass zu viele Borstenfilamente 13 in einem Borstenbündel zusammengefasst wurden, kann der Druck, den die Materialdrücker 14 auf die Borstenfilamente 13 im Materialkasten 7 der Bürstenherstellungsmaschine 1 ausüben, durch ein entsprechendes Steuersignal der Regeleinheit 2 an die Materialdrücker 14 reduziert werden. Wird bei der Prüfung der Borstenbündel mithilfe der Kamera 16 als Sensor 3 festgestellt, dass die Anzahl von Borstenfilamenten 13 in einem eingestopften Borstenbündel zu gering ist, erzeugt die Regeleinheit 2 der Bürstenherstellungsmaschine 1 autonom ein Regel- oder Steuersignal, das an die Materialdrücker 14 übermittelt wird und diese veranlasst, den Materialdruck auf die Borstenfilamente 13 im Materialkasten 7 der Bürstenherstellungsmaschine 1 zu erhöhen.

Somit ist die Bürstenherstellungsmaschine 1 also zur Durchführung des nachfolgend beschriebenen Verfahrens eingerichtet. Hierbei löst die Regeleinheit 2 der Bürstenherstellungsmaschine 1 in Abhängigkeit einer Eingangsgröße autonom eine Reaktion aus, um die Bürstenherstellungsmaschine 1 zumindest mittelbar in einen definierten Sollzustand zu regeln. Als Eingangsgröße kann eine von der Bürstenherstellungsmaschine 1 insbesondere durch maschinelles Lernen, autonom definierte oder generierte Größe verwendet werden. Es ist aber auch möglich, als Eingangsgröße einen Istwert einer physikalischen Größe zu verwenden. Der Istwert der physikalischen Größe wird mithilfe zumindest eines Sensors 3, 12, 16 der Bürstenherstellungsmaschine 1 ermittelt. Die physikalische Größe steht in einem Zusammenhang mit einem Prozessparameter der Bürstenherstellungsmaschine 1, der seinerseits mit einem Aktor 4, 11, 14 der Bürstenherstellungsmaschine 1 beeinflussbar ist.

Die Regeleinheit 2 der Bürstenherstellungsmaschine 1 betätigt unter Berücksichtigung der Eingangsgröße als Reaktion auf eine festgestellte Abweichung von einem Sollzustand dann zumindest einen Aktor 4, 11, 14 der Bürstenherstellungsmaschine 1. Durch die gezielte und autonome Betätigung des Aktors 4, 11, 14 der Bürstenherstellungsmaschine 1 wird die Bürstenherstellungsmaschine 1 in den definierten Sollzustand geregelt.

Die Bürstenherstellungsmaschine 1 ist insbesondere durch ihre Regeleinheit 2 dazu eingerichtet, maschinell aus in der Vergangenheit vorgenommenen Regelungen zu lernen. Dadurch führt die Regeleinheit 2 die Reaktionen gezielt und optimiert aus und betätigt beispielsweise den Aktor 4, 11, 14 optimiert, um den Sollzustand möglichst schnell herbeizuführen.

Bei einer Ausführungsform des Verfahrens, zu dessen Ausführung die in den Figuren zumindest teilweise dargestellte Bürstenherstellungsmaschine 1 ebenfalls eingerichtet ist, wird als weitere Eingangsgröße ein Verschleißgrad eines Verschleißteils 5, 6 der Bürstenherstellungsmaschine 1 verwendet wird. Der Verschleißgrad kann zumindest mittelbar mithilfe wenigstens eines Sensors 3, 12, 16 ermittelt werden.

Bei einer weiteren Ausführungsform des Verfahrens, zu dessen Durchführung die Bürstenherstellungsmaschine 1 ebenfalls eingerichtet ist, wird als Eingangsgröße eine Größe verwendet, die einen Bestand an Produktionsmaterial, hier beispielsweise einen Bestand an Borstenfilamenten 13 im Materialkasten 7 der Bürstenherstellungsmaschine 1, repräsentiert. Der Bestand kann zumindest mittelbar mithilfe wenigstens eines Sensors 3, 12, 16 der Bürstenherstellungsmaschine ermittelt werden. Bei der Bestandsüberwachung des Materialkastens 7 können die bereits zuvor erwähnten Drucksensoren 12 verwendet werden, die verteilt am Materialkasten 7 der Bürstenherstellungsmaschine 1 angeordnet sind. Als Reaktion auf einen abnehmenden Bestand an Borstenfilamenten 13 im Materialkasten 7 der Bürstenherstellungsmaschine 1 kann die Regeleinheit 2 der Bürstenherstellungsmaschine 1 autonom einen Nachschub an Borstenfilamenten 13 nachbestellen und/oder gegebenenfalls die Taktzeit verlängern und so die Produktionsrate reduzieren. Dies mit dem Ziel, einen ungeplanten Stillstand der Bürstenherstellungsmaschine 1 zu vermeiden und zumindest mit einer reduzierten Produktionsrate weiter produzieren zu können.

Ferner kann die Bürstenherstellungsmaschine 1 mithilfe ihrer Regeleinheit 2 und zumindest eines entsprechenden Aktors 4, 11 eine Antriebsleistung der Bürstenherstellungsmaschine 1 auf einen definierten Wert einstellen, beispielsweise auf einen Wert von 90 % oder 80 % einer Ausgangsleistung reduzieren. Dies insbesondere dann, wenn ein Verschleißgrad eines überwachten Verschleißteils 5, z.B. des Bündelabnehmers 6, einen definierten Grenzwert erreicht hat. Auf diese Weise kann die Standzeit des überwachten Verschleißteils 5, hier des Bündelabnehmers 6, verlängert werden. Ferner lassen sich so weitere Schäden an der Bürstenherstellungsmaschine 1 genauso vermeiden oder verringern, wie ein potentielles Unfall- oder Verletzungsrisiko für einen Bediener der Bürstenherstellungsmaschine 1.

Die Bürstenherstellungsmaschine 1 ist ferner dazu in der Lage, eine Verschleißgradentwicklung eines überwachten Verschleißteils 5, 6 der Bürstenherstellungsmaschine 1 mit zumindest einer in der Vergangenheit aufgezeichneten Verschleißgradentwicklung zu vergleichen. Die Verschleißgradentwicklung kann somit als Eingangsgröße der Regelung fungieren. Der Vergleich der aktuellen Verschleißgradentwicklung mit einer in der Regeleinheit 2 und/oder in dem mit dieser verbundenen Speicher 2a hinterlegten Verschleißgradentwicklung geschieht mithilfe der Regeleinheit 2. Die Regeleinheit 2 löst dann eine gezielte Reaktion aus, wenn die aktuelle Verschleißgradentwicklung von der aufgezeichneten Verschleißgradentwicklung in einem definierten Maß abweicht. Als Reaktion auf eine abweichende Verschleißgradentwicklung kann eine Meldung, insbesondere eine Warnmeldung 17 an einem als Aktor 4 dienenden Endgerät 18 ausgegeben werden.

Ferner ist es möglich, in Reaktion auf eine derart abweichende Verschleißgradentwicklung ein Ersatzteil für das überwachte Verschleißteil 5, 6 der Bürstenherstellungsmaschine 1 mit der Bürstenherstellungsmaschine 1 bzw. mit einem mit der Bürstenherstellungsmaschine 1 verbundenen PPS-System 19 autonom anzufordern. Ferner kann die Bürstenherstellungsmaschine 1 bei einer identifizierten kritischen Verschleißgradentwicklung mittels ihrer Regeleinheit 2 autonom eine Selbstdiagnose und/oder Fehleranalyse durchführen und durch Anpassungen definierter Prozessparameter (vergleiche Bezugszeichen 20) versuchen, der negativen Verschleißgradentwicklung entgegen zu wirken.

Somit ist die Bürstenherstellungsmaschine 1 insbesondere durch ihre Regeleinheit 2 dazu eingerichtet, sich selbst wieder in einen ordnungsgemäßen Zustand zurück zu regeln, wenn sie einen nicht ordnungsgemäßen Zustand festgestellt hat. Dies erfolgt vorzugsweise, indem die Bürstenherstellungsmaschine 1 einen Prozessparameter, insbesondere durch Betätigung zumindest eines Aktors 4, 11, 14 der Bürstenherstellungsmaschine 1, gezielt verändert. Die daraus resultierenden Veränderungen und deren Effekte werden mithilfe zumindest eines Sensors 3, 12, 16 der Bürstenherstellungsmaschine 1 verfolgt und von der Regeleinheit 2 analysiert und bewertet, um gegebenenfalls weitere Anpassungen an zumindest einem Prozessparameter vorzunehmen. Dies erfolgt so lange, bis die Bürstenherstellungsmaschine 1 autonom wieder ihren ordnungsgemäßen Sollzustand erreicht hat.

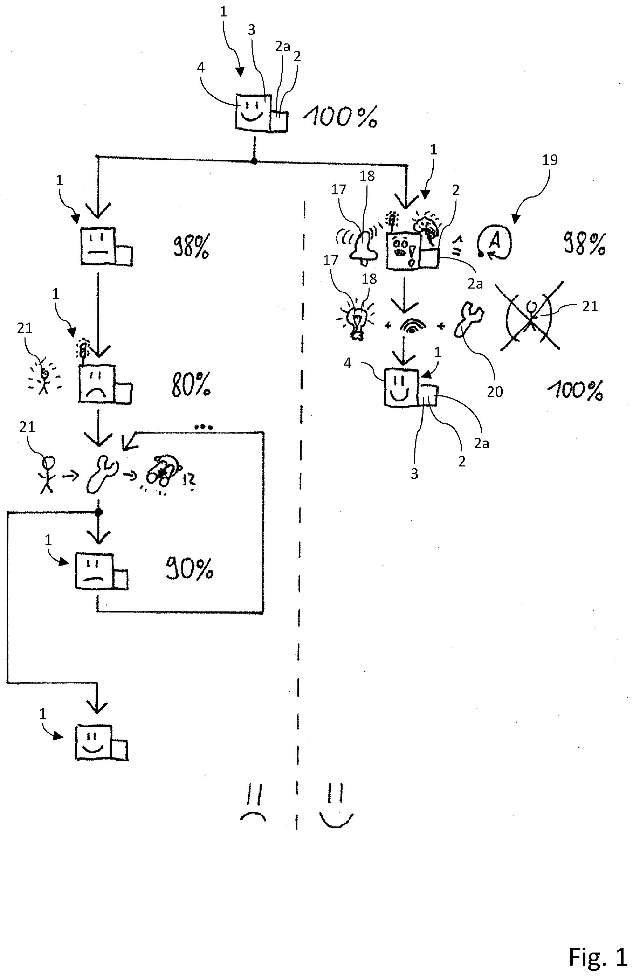

Figur 1 zeigt ein Ablaufdiagramm einer Ausführungsform eines erfindungsgemäßen Verfahrens. Auf der rechten Seite von Figur 1 ist dargestellt, wie das Verfahren erfindungsgemäß abläuft. Auf der linken Hälfte von Figur 1 ist ein Verfahrensablauf wiedergegeben, der dem bisherigen Stand der Technik entspricht. Zu Beginn des Betriebs der Bürstenherstellungsmaschine 1 befindet sich diese in einem optimalen Zustand (100 %). Mit der Zeit verschlechtert sich der Zustand der Bürstenherstellungsmaschine 1, z.B. durch Verschleiß eines Verschleißteils 5, auf 98 % und schließlich auf 80 % des Ausgangszustands. Sobald die Bürstenherstellungsmaschine 1 den 80-prozentigen Zustand erreicht hat, gibt sie eine Warnmeldung ab. Diese Warnmeldung kann von einem Bediener 21 der Bürstenherstellungsmaschine 1 wahrgenommen werden. Durch die Warnmeldung wird der Bediener 21 der Bürstenherstellungsmaschine 1 dazu veranlasst, eine Fehleranalyse durchzuführen und durch manuelle Veränderungen zumindest eines Prozessparameters der Bürstenherstellungsmaschine 1 diese in einen verbesserten Zustand von z.B. 90 % zurückzuführen. Über gegebenenfalls mehrere Iterationen kann die Bürstenherstellungsmaschine 1 mithilfe des Bedieners 21 nach und nach wieder in ihren optimalen Ausgangszustand zurückgeführt werden. Diese Vorgehensweise setzt allerdings eine hohe Qualifikation und zudem eine große Erfahrung des Bedieners 21 voraus. Ist beides nicht vorhanden, kann eine Instandsetzung der Bürstenherstellungsmaschine 1 unverhältnismäßig lang dauern.

Gemäß der rechten Hälfte von Figur 1 ist ein Eingriff durch einen Bediener 1 der Bürstenherstellungsmaschine 1 nicht notwendig. Ausgehend von dem optimalen Zustand (100 %) der Bürstenherstellungsmaschine 1 verschlechtert sich zwar auch hier mit Betrieb der Bürstenherstellungsmaschine 1 ihr Zustand. Da sich die Bürstenherstellungsmaschine 1 mithilfe der zuvor ausführlich beschriebenen Mittel, insbesondere mithilfe ihrer Regeleinheit 2, selbst überwacht, kann sie bereits bei einem Absinken ihres Zustands auf 98 % autonom Reaktionen und Gegenmaßnahmen einleiten, um sich gezielt in den Ausgangszustand, der hier der definierte Sollzustand ist, zurück zu regeln.

Zur Information eines Bedieners 21 kann die Bürstenherstellungsmaschine 1 auch hier Meldungen/Warnmeldungen 17 ausgeben. Vorteilhaft ist es, dass die Bürstenherstellungsmaschine 1 die erforderlichen Anpassungen z.B. durch Variation zumindest eines Prozessparameters/Maschinenparameters der Bürstenherstellungsmaschine 1 selbst vornimmt. Mithilfe ihres zumindest einen Sensors 3 kann die Bürstenherstellungsmaschine 1, insbesondere ihre Regeleinheit 2, die vorgenommenen Veränderungen auf ihre Wirksamkeit hin überprüfen und gegebenenfalls weitere Anpassungen vornehmen.

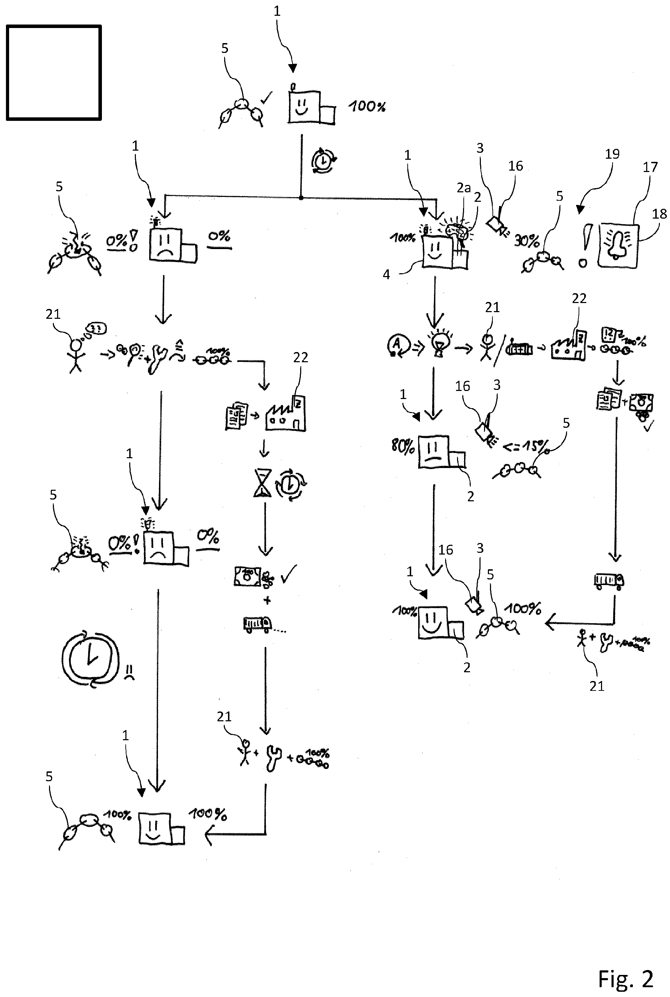

Figur 2 zeigt ein weiteres Beispiel eines erfindungsgemäßen Verfahrens. Hierbei ist auf der rechten Seite der Figur 2 wiederum das erfindungsgemäße Verfahren dargestellt, während auf der linken Seite von Figur 2 ein Verfahren abgebildet ist, wie es dem bisherigen Stand der Technik entspricht.

Ausgehend von einem optimalen Zustand von 100 % der Bürstenherstellungsmaschine 1 verschlechtert sich auch hier der Zustand eines Verschleißteils 5, einer Antriebskette, während des Betriebs der Bürstenherstellungsmaschine 1. Bei den aus dem Stand der Technik vorbekannten Verfahren wird die Bürstenherstellungsmaschine 1 so lange weiterbetrieben, bis das Verschleißteil 5 versagt, also hier die Antriebskette bricht. Dies führt zu einem ungeplanten Stillstand/Ausfall der Bürstenherstellungsmaschine 1, der zu großen Problemen in einer automatisierten Fertigung führen kann.

Zwar gibt die Bürstenherstellungsmaschine 1 eine Warnmeldung/Störungsmeldung 17 aus. Bis allerdings der Bediener 21 der Bürstenherstellungsmaschine 1 den Fehler gefunden und ein Ersatzteil für das Verschleißteil 5 bestellt hat, vergeht einige Zeit. Sofern das Ersatzteil für das Verschleißteil 5 nicht am Lager sein sollte, ist es erforderlich, das Ersatzteil für das Verschleißteil 5 bei einem Lieferanten 22 des Verschleißteils 5 zu bestellen.

Bis das Ersatzteil für das Verschleißteil 5 angeliefert wurde, vergeht wieder eine gewisse Zeit, in der die Bürstenherstellungsmaschine 1 nicht produzieren kann. Bis der Bediener 21 das Ersatzteil für das Verschleißteil 5 eingebaut hat, ist eine Wiederaufnahme der Produktion nicht möglich.

Im Vergleich dazu vermeidet das erfindungsgemäße Verfahren, das auf der rechten Seite von Figur 2 veranschaulicht wird, ungeplante Stillstandszeiten völlig. Zwar ist auch bei dem erfindungsgemäßen Verfahren das Verschleißteil 5, hier die Antriebskette, während des Betriebs der Bürstenherstellungsmaschine 1 von Verschleiß betroffen. Allerdings wird hier das Verschleißteil 5 während des Betriebs der Bürstenherstellungsmaschine mithilfe eines Sensors 3, hier einer Kamera 16, fortlaufend überwacht. Wird festgestellt, dass ein Verschleißgrad des Verschleißteils 5 angestiegen und daher eine Produktion mit voller Leistung nicht mehr möglich ist, gibt die Bürstenherstellungsmaschine 1 eine Warnmeldung 17 aus. In einem weiteren Schritt bestellt die Bürstenherstellungsmaschine 1 autonom ein Ersatzteil für das überwachte und bald zu ersetzende Verschleißteil 5. Darüber wird der Bediener 21 der Bürstenherstellungsmaschine 1 wiederum informiert. Entweder geschieht dieser Bestellprozess vollständig autonom oder es wird zunächst eine Freigabe der Bestellung durch den Bediener 21 abgewartet. Die Bestellung wird schließlich an einen Lieferanten 22 für das Ersatzteil des Verschleißteils 5 übermittelt. Der Lieferant 22 bearbeitet die Bestellung und bestätigt diese unter Rückmeldung der voraussichtlichen Kosten und eines voraussichtlichen Liefertermins.

Währenddessen kann die Bürstenherstellungsmaschine 1 zunächst mit unverminderter Leistung produzieren. Steigt der Verschleißgrad des Verschleißteils 5 weiter an, kann die Leistung der Bürstenherstellungsmaschine 1, hier eines Antriebs 11 der Bürstenherstellungsmaschine 1 z.B. auf einen Wert von 80 % der Ausgangsleistung reduziert werden. Auf diese Weise kann die Standzeit des Verschleißteils 5 verlängert werden, bis das Ersatzteil für das Verschleißteil 5 angeliefert ist und eingebaut werden kann.

Die Erfindung befasst sich mit Verbesserungen auf dem technischen Gebiet der Herstellung von Bürsten. Als Verbesserung wird insbesondere eine Bürstenherstellungsmaschine 1 vorgeschlagen, die zur Durchführung eines Verfahrens zur Herstellung von Bürsten eingerichtet ist. Hierbei ist vorgesehen, dass eine Regeleinheit 2 der Bürstenherstellungsmaschine 1 in Abhängigkeit einer Eingangsgröße autonom eine Reaktion auslöst, um die Bürstenherstellungsmaschine 1 zumindest mittelbar in einen definierten Sollzustand zu regeln.

### Bezugszeichenliste

- 1: Bürstenherstellungsmaschine
- 2: Regeleinheit
- 2a: Speicher
- 2b: Signalverbindung
- 3: Sensor
- 4: Aktor
- 5: Verschleißteil
- 6: Bündelabnehmer
- 7: Materialkasten
- 8: Stopfwerkzeug
- 9: Bürstenkörper
- 10: Haltevorrichtung
- 11: Antrieb
- 12: Drucksensor
- 13: Borstenfilamente
- 14: Materialdrücker
- 15: Abteilkerbe
- 16: Kamera
- 17: Warnmeldung
- 18: Endgerät
- 19: PPS-System
- 20: Anpassung von Prozessparameter
- 21: Bediener
- 22: Lieferant

## Patentansprüche

1. Verfahren zur Herstellung von Bürsten unter Verwendung einer Bürstenherstellungsmaschine (1), wobei eine Regeleinheit (2) der Bürstenherstellungsmaschine (1) in Abhängigkeit einer Eingangsgröße autonom eine Reaktion auslöst, um die Bürstenherstellungsmaschine (1) zumindest mittelbar in einen definierten Sollzustand zu regeln, **dadurch gekennzeichnet, dass** als Eingangsgröße ein Verschleißgrad eines Verschleißteils (5, 6) verwendet wird, nämlich der Verschleißgrad wenigstens eines Stiftpakets und/oder zumindest eines Spanneinsatzes der Bürstenherstellungsmaschine für einen einzudrehenden Draht ermittelt wird, und wobei als Reaktion eine Antriebsleistung der Bürstenherstellungsmaschine (1) auf einen definierten Wert eingestellt wird, wenn der Verschleißgrad oder ein daraus abgeleiteter Wert, einen definierten Grenzwert erreicht hat.

2. Verfahren nach Anspruch 1, wobei als Sensor zur Ermittlung des Verschleißgrades des Stiftpakets ein optischer Sensor und/oder ein Druck- oder Kraftsensor und/oder eine Kamera verwendet wird, und/oder wobei der Verschleißgrad des Stiftpakets anhand einer Partikelentwicklung bei Benutzung des Stiftpakets mithilfe einer Kamera und/oder anhand eines sich einstellenden Einpressdrucks bei Verwendung des Stiftpakets ermittelt wird .

3. Verfahren nach Anspruch 1 oder 2, wobei als Sensor zur Bestimmung des Verschleißgrads des Spanneinsatzes ein optischer Sensor, ein Temperatursensor, eine Messschaltung, ein Spannungsmessgerät und/oder eine Kamera verwendet werden, und/oder wobei der Verschleißgrad des Spanneinsatzes mittels Spannungsmessung und/oder mittels Schwingungsmessung und/oder mittels Temperaturmessung an einem Linearmotor bestimmt wird.

4. Verfahren nach einem der vorherigen Ansprüche, wobei die Bürstenherstellungsmaschine (1), insbesondere die Regeleinheit (2) der Bürstenherstellungsmaschine (1), den Sollzustand autonom definiert, insbesondere auf Basis der Eingangsgröße, eines vorgegebenen Produktionsprogramms und/oder einer der Bürstenherstellungsmaschine (1), insbesondere der Regeleinheit (2) der Bürstenherstellungsmaschine (1), übermittelten Vorgabe.

5. Verfahren nach einem der vorherigen Ansprüche, wobei die Bürstenherstellungsmaschine (1), insbesondere die Regeleinheit (2) der Bürstenherstellungsmaschine (1), maschinell lernt, vorzugsweise aus zuvor durchgeführten Regelungsvorgängen, die Reaktion optimiert auszuführen, insbesondere als Reaktion den Aktor (4, 11, 14) optimiert zu betätigen, um den definierten Sollzustand zu erreichen.

6. Verfahren nach einem der vorherigen Ansprüche, wobei als Reaktion die Antriebsleistung der Bürstenherstellungsmaschine (1), insbesondere zumindest eines Antriebs (11) der Bürstenherstellungsmaschine (1), auf einen definierten Wert, nämlich auf einen Wert von 90% oder 80% einer Ausgangsleistung eingestellt wird, wenn der Verschleißgrad oder ein daraus abgeleiteter Wert einen definierten Grenzwert erreicht hat.

7. Verfahren nach einem der vorherigen Ansprüche, wobei sich die Bürstenherstellungsmaschine (1), insbesondere mithilfe ihrer Regeleinheit (2), selbst wieder in den Sollzustand zurückregelt, wenn ein nicht ordnungsgemäßer Zustand festgestellt wurde, vorzugsweise indem die Bürstenherstellungsmaschine (1) zumindest einen Prozessparameter, insbesondere durch Betätigung zumindest eines Aktors (4, 11, 14) der Bürstenherstellungsmaschine (1), gezielt verändert, die Veränderung und deren Effekt mithilfe zumindest eines Sensors verfolgt und gegebenenfalls weitere Anpassungen an zumindest einem Prozessparameter vornimmt, so lange bis sie den Sollzustand erreicht hat.

8. Bürstenherstellungsmaschine (1) eingerichtet zur Durchführung des Verfahrens nach einem der vorherigen Ansprüche, wobei die Bürstenherstellungsmaschine (1) eine Regeleinheit (2) und wenigstens ein Stiftpaket und/oder wenigstens einen Spanneinsatz aufweist, wobei eine von der Bürstenherstellungsmaschine (1) berücksichtigte Eingangsgröße ein Verschleißgrad eines Verschleißteils (5), nämlich des Stiftpakets und/oder des Spanneinsatzes ist, und wobei die Bürstenherstellungsmaschine (1) wenigstens einen Sensor (3) aufweist, der dazu eingerichtet ist, einen Verschleißgrad des Stiftpakets und/oder des Spanneinsatzes zu bestimmen, und wobei die Regeleinheit (2) dazu eingerichtet ist, als Reaktion eine Antriebsleistung der Bürstenherstellungsmaschine (1) auf einen definierten Wert zu reduzieren, wenn der Verschleißgrad oder ein daraus abgeleiteter Wert einen definierten Grenzwert erreicht hat.

9. Bürstenherstellungsmaschine (1) nach Anspruch 8, **dadurch gekennzeichnet, dass** die Bürstenherstellungsmaschine (1), insbesondere die Regeleinheit (2) der Bürstenherstellungsmaschine (1), zum maschinellen Lernen eingerichtet ist.

10. Bürstenherstellungsmaschine (1) nach einem der Ansprüche 8 oder 9 wobei die Bürstenherstellungsmaschine (1) als wenigstens einen Sensor (3) einen Schwingungssensor, einen Kraftsensor, einen Drucksensor (12), einen Volumenstromsensor, einen Temperatursensor, eine Messschaltung, einen Widerstandssensor, einen Drehzahlsensor, einen Partikelsensor und/oder einen Durchflusssensor, ein Spannungsmessgerät und/oder eine Kamera (16) aufweist.

## Claims

1. Method for manufacturing brushes using a brush manufacturing machine (1), wherein a control unit (2) of the brush manufacturing machine (1) autonomously triggers a response depending on an input variable in order to control the brush manufacturing machine (1) at least indirectly to a defined target state, **characterized in that** a degree of wear of a wear part (5, 6), specifically the degree of wear of at least one pin package and/or at least one clamping insert of the brush manufacturing machine for a wire to be turned in, is used as the input variable, and wherein, in response, a drive power of the brush manufacturing machine (1) is set to a defined value when the degree of wear or a value derived therefrom has reached a defined limit value.

2. Method according to claim 1, wherein an optical sensor and/or a pressure or force sensor and/or a camera is used as a sensor for determining the degree of wear of the pin package, and/or wherein the degree of wear of the pin package is determined on the basis of particle development during use of the pin package by means of a camera and/or on the basis of a press-in pressure that builds up during use of the pin package.

3. Method according to claim 1 or 2, wherein an optical sensor, a temperature sensor, a measuring circuit, a voltage measuring device and/or a camera are used as a sensor for determining the degree of wear of the clamping insert, and/or wherein the degree of wear of the clamping insert is determined by means of voltage measurement and/or by means of vibration measurement and/or by means of temperature measurement on a linear motor.

4. Method according to one of the preceding claims, wherein the brush manufacturing machine (1), in particular the control unit (2) of the brush manufacturing machine (1), autonomously defines the target state, in particular on the basis of the input variable, a predetermined production program and/or a predetermined value transmitted to the brush manufacturing machine (1), in particular to the control unit (2) of the brush manufacturing machine (1).

5. Method according to one of the preceding claims, wherein the brush manufacturing machine (1), in particular the control unit (2) of the brush manufacturing machine (1), learns mechanically, preferably from previously performed control processes, to perform the response in an optimized manner, in particular to actuate the actuator (4, 11, 14) in an optimized manner in response in order to achieve the defined target state.

6. Method according to one of the preceding claims, wherein, in response, the drive power of the brush manufacturing machine (1), in particular at least one drive (11) of the brush manufacturing machine (1), is set to a defined value, specifically to a value of 90% or 80% of an output power, when the degree of wear or a value derived therefrom has reached a defined limit value.

7. Method according to one of the preceding claims, wherein the brush manufacturing machine (1), in particular by means of its control unit (2), automatically returns itself via control to the target state when an improper state has been detected, preferably by the brush manufacturing machine (1) changing at least one process parameter, in particular by actuating at least one actuator (4, 11, 14) of the brush manufacturing machine (1), monitoring the change and its effect by means of at least one sensor and, optionally, making further adjustments to at least one process parameter until the target state is reached.

8. Brush manufacturing machine (1) designed to carry out the method according to one of the preceding claims, wherein the brush manufacturing machine (1) has a control unit (2) and at least one pin package and/or at least one clamping insert, wherein an input variable taken into account by the brush manufacturing machine (1) is a degree of wear of a wear part (5), specifically the pin package and/or the clamping insert, and wherein the brush manufacturing machine (1) has at least one sensor (3) which is designed to determine a degree of wear of the pin package and/or the clamping insert, and wherein the control unit (2) is designed to reduce the drive power of the brush manufacturing machine (1) to a defined value in response to the degree of wear or a value derived therefrom reaching a defined limit value.

9. Brush manufacturing machine (1) according to claim 8, **characterized in that** the brush manufacturing machine (1), in particular the control unit (2) of the brush manufacturing machine (1), is designed for machine learning.

10. Brush manufacturing machine (1) according to one of claims 8 or 9, wherein the brush manufacturing machine (1) has as at least one sensor (3) a vibration sensor, a force sensor, a pressure sensor (12), a volume flow sensor, a temperature sensor, a measuring circuit, a resistance sensor, a speed sensor, a particle sensor and/or a flow sensor, a voltage measuring device and/or a camera (16).

## Revendications

1. Procédé pour la fabrication de brosses à l'aide d'une machine à fabriquer des brosses (1), dans lequel une unité de régulation (2) de la machine à fabriquer des brosses (1) déclenche une réaction de façon autonome en fonction d'une grandeur d'entrée afin de réguler la machine à fabriquer des brosses (1) au moins indirectement dans un état de consigne défini, **caractérisé en ce que** la grandeur d'entrée utilisée est un degré d'usure d'une pièce d'usure (5, 6), à savoir le degré d'usure d'au moins un paquet de pointes et/ou d'au moins un insert de tendeur de la machine à fabriquer des brosses pour un fil à entourer et dans lequel, en réaction, une puissance d'entraînement de la machine à fabriquer des brosses (1) est réglée à une valeur définie quand le degré d'usure ou une valeur dérivée de celui-ci a atteint une limite définie.

2. Procédé selon la revendication 1, dans lequel le capteur utilisé pour déterminer le degré d'usure du paquet de pointes est un capteur optique et/ou un capteur de pression ou de force et/ou une caméra et/ou dans lequel le degré d'usure du paquet de pointes est déterminé à l'aide de la formation de particules lors de l'utilisation du paquet de pointes avec une caméra et/ou à l'aide d'une pression d'enfoncement qui se crée lors de l'utilisation du paquet de pointes.

3. Procédé selon la revendication 1 ou 2, dans lequel le capteur utilisé pour déterminer le degré d'usure de l'insert de tendeur est un capteur optique, un capteur de température, un circuit de mesure, un appareil de mesure de la tension et/ou une caméra et/ou dans lequel le degré d'usure de l'insert de tendeur est déterminé au moyen d'une mesure de la tension et/ou au moyen d'une mesure des vibrations et/ou au moyen d'une mesure de la température au niveau d'un moteur linéaire.

4. Procédé selon l'une des revendications précédentes, dans lequel la machine à fabriquer des brosses (1), en particulier l'unité de régulation (2) de la machine à fabriquer des brosses (1), définit de façon autonome l'état de consigne, en particulier sur la base de la grandeur d'entrée, d'un programme de production prédéterminé et/ou d'une consigne transmise à la machine à fabriquer des brosses (1), en particulier à l'unité de régulation (2) de la machine à fabriquer des brosses (1).

5. Procédé selon l'une des revendications précédentes, dans lequel la machine à fabriquer des brosses (1), en particulier l'unité de régulation (2) de la machine à fabriquer des brosses (1), apprend automatiquement, de préférence par les processus de régulation exécutés auparavant, à effectuer la réaction de façon optimisée, en particulier à actionner l'actionneur (4, 11, 14) de façon optimisée en réaction, afin d'obtenir l'état de consigne défini.

6. Procédé selon l'une des revendications précédentes dans lequel, en réaction, la puissance d'entraînement de la machine à fabriquer des brosses (1), en particulier d'au moins un entraînement (11) de la machine à fabriquer des brosses (1), est réglée à une valeur définie, à savoir à une valeur de 90 % ou 80 % de la puissance initiale, quand le degré d'usure ou une valeur dérivée à partir de celui-ci a atteint une limite définie.

7. Procédé selon l'une des revendications précédentes, dans lequel la machine à fabriquer des brosses (1) se régule pour revenir d'elle-même à l'état de consigne, en particulier avec l'aide de son unité de régulation (2), quand un état non conforme a été constaté, de préférence par le fait que la machine à fabriquer des brosses (1) modifie de façon ciblée au moins un paramètre de process, en particulier par l'actionnement d'au moins un actionneur (4, 11, 14) de la machine à fabriquer des brosses (1), suit la modification et son effet à l'aide d'au moins un capteur et effectue, le cas échéant, d'autres ajustements d'au moins un paramètre de process jusqu'à ce qu'elle ait atteint l'état de consigne.

8. Machine à fabriquer des brosses (1) agencée pour exécuter le procédé selon l'une des revendications précédentes, dans laquelle la machine à fabriquer des brosses (1) comporte au moins une unité de régulation (2) et au moins un paquet de pointes et/ou au moins un insert de tendeur, dans laquelle une grandeur d'entrée à prendre en compte par la machine à fabriquer des brosses (1) est un degré d'usure d'une pièce d'usure (5), à savoir du paquet de pointes et/ou de l'insert de tendeur, et dans laquelle la machine à fabriquer des brosses (1) comporte au moins un capteur (3) configuré pour déterminer un degré d'usure du paquet de pointes et/ou de l'insert de tendeur, et dans laquelle l'unité de régulation (2) est agencée pour réduire, en réaction, une puissance d'entraînement de la machine à fabriquer des brosses (1) à une valeur définie si le degré d'usure ou une valeur qui en est dérivée a atteint une limite définie.

9. Machine à fabriquer des brosses (1) selon la revendication 8, **caractérisée en ce que** la machine à fabriquer des brosses (1), en particulier l'unité de régulation (2) de la machine à fabriquer des brosses (1), est agencée en vue d'un apprentissage automatique.

10. Machine à fabriquer des brosses (1) selon l'une des revendications 8 ou 9, laquelle machine à fabriquer des brosses (1) comporte, comme au moins un capteur (3), un capteur de vibrations, un capteur de force, un capteur de pression (12), un capteur de débit volumique, un capteur de température, un circuit de mesure, un capteur de résistance, un capteur de vitesse de rotation, un capteur de particules et/ou un capteur d'écoulement, un appareil de mesure de la tension et/ou une caméra (16).
